(19) Europäisches Patentamt
European Patent Office
Office européen des brevets

(11) **EP 4 306 318 A1**

(12) **EUROPEAN PATENT APPLICATION**
published in accordance with Art. 153(4) EPC

(43) Date of publication:
**17.01.2024 Bulletin 2024/03**

(21) Application number: **22767114.6**

(22) Date of filing: **08.03.2022**

(51) International Patent Classification (IPC):
***B32B 27/40*** *(2006.01)* ***C08F 290/00*** *(2006.01)*
***C08F 290/14*** *(2006.01)* ***C09K 9/02*** *(2006.01)*
***G02C 7/10*** *(2006.01)* ***C09D 183/07*** *(2006.01)*
***C08F 2/44*** *(2006.01)* ***C09D 7/63*** *(2018.01)*
***B32B 7/023*** *(2019.01)* ***G02B 5/23*** *(2006.01)*

(52) Cooperative Patent Classification (CPC):
**B32B 7/023; B32B 27/40; C08F 2/44; C08F 290/00; C08F 290/14; C09D 7/63; C09D 183/04; C09K 9/02; G02B 5/23; G02C 7/10**

(86) International application number:
**PCT/JP2022/009857**

(87) International publication number:
**WO 2022/191160 (15.09.2022 Gazette 2022/37)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **08.03.2021 JP 2021036754**
**16.04.2021 JP 2021069439**
**04.06.2021 JP 2021094398**

(71) Applicant: **Tokuyama Corporation**
**Shunan-shi, Yamaguchi 745-8648 (JP)**

(72) Inventors:
- **HANASAKI, Taichi**
  **Shunan-shi, Yamaguchi 745-8648 (JP)**
- **MIYAZAKI, Masayuki**
  **Shunan-shi, Yamaguchi 745-8648 (JP)**
- **HIRAREN, Toshimitsu**
  **Shunan-shi, Yamaguchi 745-8648 (JP)**
- **MORI, Katsuhiro**
  **Shunan-shi, Yamaguchi 745-8648 (JP)**
- **MOMODA, Junji**
  **Shunan-shi, Yamaguchi 745-8648 (JP)**

(74) Representative: **Kraus & Weisert Patentanwälte PartGmbB et al**
**Thomas-Wimmer-Ring 15**
**80539 München (DE)**

# (54) PHOTOCHROMIC CURABLE COMPOSITION, PHOTOCHROMIC LAMINATE, AND METHOD FOR PRODUCING SAME

(57) The present invention provides a photochromic curable composition capable of providing a cured product excellent in appearance, a photochromic optical article including the cured product, and a method for producing the same. According to an embodiment, there is provided a photochromic curable composition including (A) a siloxane having an acyclic polysiloxane bond and at least one of a radically polymerizable group and a group reactive with a radically polymerizable group, (B) a radically polymerizable monomer component, and (C) a photochromic compound.

Fig. 1

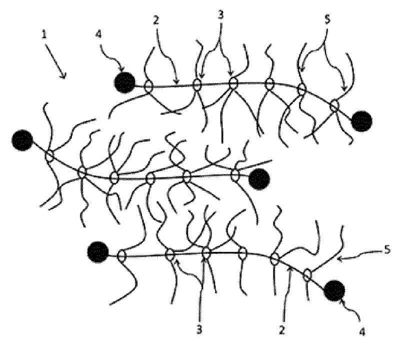

EP 4 306 318 A1

## Description

Technical field:

The present invention relates to a photochromic curable composition, a photochromic laminate and a method for producing the same.

Background art:

Photochromic compounds represented by chromene compounds, fulgide compounds, spirooxazine compounds and the like have photochromic properties. Namely, these compounds change their colors quickly when irradiated with light containing ultraviolet rays such as sunlight or light of a mercury lamp, and then, returns to the original color after the light irradiation is stopped and the compounds are kept in the dark. The photochromic compounds have been used in various applications, particularly in optical materials, taking advantage of the properties.

For instance, photochromic eyeglasses for which a photochromic compound is used are functional eyeglasses that are quickly colored and function as sunglasses outdoors irradiated with sunlight, and the glasses are faded to function as colorless transparent eyeglasses indoors where there is no irradiation of sunlight. The demand for photochromic glasses has been increasing in recent years.

Examples of methods for producing a photochromic optical article having a lens for photochromic glasses contain a kneading method, a binder method, and a coating method (Patent Documents 1, 2 and 3) . In the kneading method, a photochromic optical article such as a lens is molded by polymerizing a polymerizable composition containing a polymerizable monomer and a photochromic compound. In the binder method, a pair of optical sheets are bonded with an adhesive layer containing a photochromic compound, and the obtained laminate is processed into a lens or the like to obtain a photochromic optical article.

Among the aforementioned methods, the coating method can impart higher productivity. In the coating method, first, a curable composition containing a photochromic compound and a polymerizable monomer is applied on the surface of a lens or the like by spin coating or the like to form a coating film. By curing this coating film, a laminate with a photochromic resin layer formed on the lens surface is obtained. The laminate can be used as a photochromic optical article. In the coating method, a leveling agent may be blended into the curable composition in order to make the coating film surface uniform.

As for a photochromic optical article such as a photochromic lens obtained by the coating method, a protective film may be attached to the surface of the photochromic resin layer. Specifically, in the process of producing an optical instrument such as photochromic sunglasses using the photochromic lens as a component, and in the storage and shipment of the produced optical instrument, the photochromic resin layer of the lens may be scratched or dust may adhere thereto. By covering the surface of the photochromic resin layer of the lens with a protective film, the problems of scratches and adhesion of dust can be prevented. Further, a colored film may be used as the protective film. Since the photochromic lens is colorless and transparent when not irradiated with ultraviolet rays, the colored protective film attached to the surface thereof may function as an identification label. As a protective film, for instance, a general-purpose protective film having an acrylic adhesive on the adhesive surface is used.

Prior art documents:

Patent documents:

Patent Document 1: WO2012/176439
Patent Document 2: WO2013/099640
Patent Document 3: WO2015/068798

Summary of the invention:

Problem to be solved by the invention:

The present invention aims to provide a photochromic curable composition for providing a cured product excellent in appearance, a photochromic optical article comprising the cured product, and a method for producing the same.

Means for solving problems:

A first embodiment relates to a photochromic curable composition comprising:

(A) a siloxane having an acyclic polysiloxane bond, and at least one of a radically polymerizable group and a group reactive with a radically polymerizable group,
(B) a radically polymerizable monomer component, and
(C) a photochromic compound.

It is preferable that the first embodiment takes the following aspects.
It is preferable that the amount of the siloxane relative to 100 parts by mass of the radically polymerizable monomer component is 0.01 parts by mass or more and 10 parts by mass or less.
It is preferable that the siloxane contains a compound represented by a formula (8) below.

[CF 1]

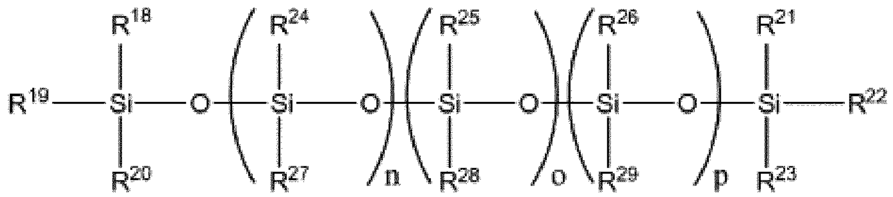
(8)

In the formula (8), n is a number from 0 to 20, o is a number from 0 to 20, and p is a number from 0 to 20. $R^{18}$, $R^{19}$, $R^{20}$, $R^{21}$, $R^{22}$, $R^{23}$, $R^{24}$, $R^{25}$, $R^{26}$, $R^{27}$, $R^{28}$ and $R^{29}$ are each a hydrogen atom, an alkyl group having 1 to 20 carbon atoms, an alkoxy group having 1 to 20 carbon atoms, a phenyl group, $-(CH_2)_\alpha OR^{30}$, $-(CH_2CH_2O)_\alpha R^{30}$, $-(CH(CH_3)CH_2O)_\alpha R^{30}$, $-(CH_2CH(CH_3)O)_\alpha R^{30}$, $-(CH_2)_qO-(CH_2CH_2O)_rR^{30}-$, $-(CH_2)_qO-(CH(CH_3)CH_2O)_rR^{30}$, $-(CH_2)_qO-(CH_2CH(CH_3)O)_rR^{30}$, $-(CH_2CH_2O)_q-(CH_2CH(CH_3)O)_rR^{30}$, $-(CH_2CH(CH_3)O)_q-(CH_2CH_2O)_rR^{30}$, $-(CH_2CH_2O)_q-(CH_2CH(CH_3)O)_r-(CH_2CH_2O)_sR^{30}$, $-(CH_2)_qO-(CH_2CH_2O)_r-(CH_2CH(CH_3)O)_sR^{30}$, $-(CH_2)_qO-(CH_2CH(CH_3)O)_r-(CH_2CH_2O)_sR^{30}$, $-(CH_2)_qO-(CH_2CH_2O)_r-(CH_2CH(CH_3)O)_s-(CH_2CH_2O)_zR^{30}$, an acryloyl group, a methacryloyl group, a vinyl group, a thiol group, an amino group, $-R^{31}NH_2$, an epoxy group, a group represented by a formula (9) below, or a group represented by a formula (10) below.
$R^{30}$ is a hydrogen atom, a methyl group, an ethyl group, an n-propyl group, or an isopropyl group.
$R^{31}$ is an alkylene group having 1 to 20 carbon atoms or $-(CH_2)_\alpha O-$.
Here, at least one of $R^{18}$ to $R^{29}$ is an acryloyl group, a methacryloyl group, a vinyl group, a thiol group, an amino group, $-R^{31}NH_2$, an epoxy group, a group represented by a formula (9) below, or a group represented by a formula (10) below.

[CF 2]

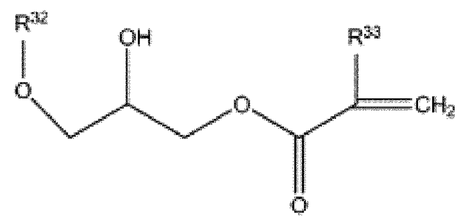
(9)

In the formula (9), $R^{32}$ is an alkylene group having 1 to 20 carbon atoms, $-(CH_2)_\alpha O-$, $-(CH_2CH_2O)_\alpha-$, or $-(CH_2CH(CH_3)O)_\alpha-$. $R^{33}$ is a hydrogen atom or a methyl group.

[CF 3]

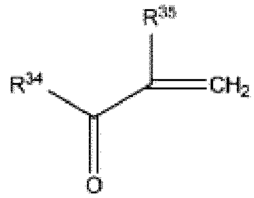

(10)

In the formula (10), $R^{34}$ is an oxygen atom, $-(CH_2)_\alpha O-$, $-(CH_2CH_2O)_\alpha-$, $-(CH(CH_3)CH_2O)_\alpha-$, $-(CH_2CH(CH_3)O)_\alpha-$, $-(CH_2)_qO-(CH_2CH_2O)_r-$, $-(CH_2)_qO-(CH(CH_3)CH_2O)_r-$, $-(CH_2)_qO-(CH_2CH(CH_3)O)_r-$, $-(CH_2CH_2O)_q-(CH_2CH(CH_3)O)_r-$, $-(CH_2CH(CH_3)O)_q-(CH_2CH_2O)_r-$, $-(CH_2CH_2O)_q-(CH_2CH(CH_3)O)_r-(CH_2CH_2O)_s-$, $-(CH_2)_qO-(CH_2CH_2O)_r-(CH_2CH(CH_3)O)_s-$, $-(CH_2)_qO-(CH_2CH(CH_3)O)_r-(CH_2CH_2O)_s-$, or $-(CH_2)_qO-(CH_2CH_2O)_r-(CH_2CH(CH_3)O)_s-(CH_2CH_2O)_z-$.

$R^{35}$ is a hydrogen atom or a methyl group.

In the formula (8), the formula (9) and the formula (10), $\alpha$ is a number from 1 to 20; q, r, s, and z each is a number from 0 to 20, q+r is a number from 1 to 40, q+r+s is a number from 1 to 60, and q+r+s+z is a number from 1 to 80.

It is preferable that a radically polymerizable group and a group reactive with a radically polymerizable group in the siloxane contain a (meth)acryloyl group.

It is preferable that the radically polymerizable monomer component contains a polyrotaxane compound having a radically polymerizable group.

It is preferable that the radically polymerizable monomer component contains silsesquioxane having a bifunctional or polyfunctional (meth)acryloyl group.

It is preferable that a reactive hindered amine compound having one or more reactive group, which is at least one kind selected from the group consisting of a radically polymerizable group and a group reactive with a radically polymerizable group is further contained.

It is preferable that a non-reactive hindered amine compound having neither a radically polymerizable group nor a group reactive with a radically polymerizable group is further contained.

It is preferable that an organic compound having a boiling point of 80°C or higher and 200°C or lower and a Hildebrand SP value of 8.0 or more and 10.0 or less is further contained.

A second embodiment comprises: a photochromic laminate comprising:

an optical substrate,
a photochromic resin layer that is a cured product of the photochromic curable composition according to the first embodiment, and
a polyurethane resin layer disposed between the optical substrate and the photochromic resin layer.

A third embodiment comprises: a method for producing a photochromic laminate, comprising:

forming a polyurethane resin layer by applying, on one surface of an optical substrate, a coating solution containing at least one compound selected from the group consisting of a polyurethane resin and a precursor of a moisture-curable urethane resin and a solvent having a boiling point of 70°C or higher and a Hildebrand SP value of 8.0 or more, and removing the solvent from the coating film; and
forming a photochromic resin layer by applying on the polyurethane resin layer the photochromic curable composition according to the first embodiment and curing the coating film.

Effect of the invention:

According to the present invention, there is provided a photochromic curable composition capable of providing a cured product excellent in appearance, and a photochromic optical article comprising the cured product, and a method of producing the same.

Brief description of the drawing(s):

[Fig. 1] is a schematic view showing an example of molecular structure of polyrotaxane.

Mode for carrying out the invention:

The photochromic curable composition according to the embodiment comprises a component (A), a component (B), and a component (C) described below.

The component (A) is a siloxane having an acyclic polysiloxane bond and at least either a radically polymerizable group or a group reactive with a radically polymerizable group; the component (B) is a radically polymerizable monomer component; and the component (C) is a photochromic compound.

By using the photochromic curable composition according to the embodiment, a cured product having high uniformity and excellent appearance can be obtained because formation of fine wrinkle-like streaks can be prevented or reduced. Therefore, a photochromic optical article having excellent appearance is obtained. As for this reason, the present inventors consider as follows.

Attachment of the aforementioned protective film to the photochromic resin layer may cause problems in the photochromic optical article. For instance, a desired color tone may not be obtained, or appearance defects such as a wrinkle-like streak may occur. More specifically, after removing the protective film from the photochromic optical article, the pressure-sensitive adhesive and the colorant contained in the protective film may stuck to the surface of the photochromic resin layer. When the pressure-sensitive adhesive and the colorant unfavorably remain on or permeate the photochromic resin layer, the color tone of the photochromic resin layer may change from the desired color tone. In addition, fine wrinkle-like streaks may be formed inside the photochromic resin layer.

The present inventors have found that the fine wrinkle-like streaks are caused by the adhesive applied to the adhesive plane of the protective film. In other words, it is considered that the acrylic adhesive used for the protective film permeates from the adhesive surface of the protective film into the photochromic resin layer so as to be cured inside the photochromic resin layer, thereby causing the pattern seemed like streaks or stripes.

As a result of further intensive studies by the present inventors, it has been found that this permeation of the acrylic adhesive may occur under influences of the leveling agent. Usually, a non-reactive silicone oil or the like is used for the leveling agent in a curable composition. The non-reactive silicone oil has a linear polysiloxane skeleton, and the terminal or the side chain of the polysiloxane skeleton is a siloxane having a structure modified with a non-reactive organic functional group. The leveling agent is oriented on the surface of the coating film to lower the surface tension of the coating film surface. In this manner, it is possible to prevent or reduce increase in viscosity of the curable composition and to eliminate the roughness of the coating film, thereby smoothening the surface thereof. Since the leveling agent is cured in a state oriented on the surface of the coating film, probably it is oriented also on the surface of the photochromic resin layer. When the leveling agent is oriented on the surface of the resin layer in this manner, the components such as the adhesive in the protective film tend to be easily taken into the photochromic resin layer. Therefore, use of the conventional leveling agent will increase the smoothness of the coating film, but it may cause foreign matters like fine streaks or stripes derived from the protective film. The foreign matters are found inside the photochromic resin layer.

By using a curable composition that does not contain such a conventional leveling agent, a photochromic resin layer free from the fine wrinkle-like streaks can be obtained. However, a photochromic resin layer formed from the curable composition may have uneven film thickness. Further, irregularities appear on the surface so as to make an appearance seemed like an orange peel. In a case of applying the curable composition by spin coating, a spiral pattern derived from the unevenness of the coating film may be formed inside the photochromic resin layer.

The photochromic curable composition according to the embodiment includes: (A) a siloxane having an acyclic polysiloxane bond and at least one of a radically polymerizable group and a group reactive with a radically polymerizable group, and (B) a radically polymerizable monomer component. Hereinafter, at least one of the radically polymerizable group and the group reactive with the radically polymerizable group may be also referred to as a radically reactive group. Since this component (A) has an acyclic polysiloxane bond and a radically reactive group, it functions as a leveling agent. The radically reactive group of the component (A) reacts with the component (B) upon curing of the curable composition. It is considered that in the cured product of this composition, the component (A) and at least a part of the component (B) are in a state of a polymerized composite. Since the component (A) in the composite is polymerized with the component (B), the orientation to the surface of the photochromic resin layer seems to be reduced. In other words, in the coating film of the photochromic curable composition, the component (A) may be oriented on the surface of the coating film in the same manner as in the conventional leveling agent to reduce the surface tension thereof. In this manner, a coating film having high uniformity can be obtained by using the photochromic curable composition according to the embodiment. Upon curing this coating film, since the component (A) is polymerized with the component (B) to form a composite, the orientation to the surface is prevented or reduced, whereby the random dispersibility inside the photochromic resin layer is enhanced. The thus obtained photochromic resin layer is less influenced by the adhesive and the colorant contained in the protective film to be attached to the surface. In conclusion, by using the photochromic curable composition according to the embodiment, it is possible to form a photochromic resin layer that is more uniform. The layer has fewer wrinkle-like streaks and has excellent appearance.

Hereinafter, each component contained in the curable composition will be described in detail.

<Component (A)>

The component (A) is a siloxane having an acyclic polysiloxane bond and a radically polymerizable group. The component (A) functions as a leveling agent, as described above.

Examples of the radically polymerizable group of the component (A) include at least one kind of functional group selected from the group consisting of an acryloyl group, a methacryloyl group, and a vinyl group. Note that a functional group containing at least either the acryloyl group or the methacryloyl group may also be described as a (meth)acryloyl group. Further, an example of the group reactive with a radically polymerizable group is at least one functional group selected from the group consisting of a thiol group, an amino group, and an epoxy group. These reactive groups are groups that polymerize or react with the component (B) described in detail below. Particularly preferred is the (meth)acryloyl group. The component (A) as a radically reactive group may have both a radically polymerizable group and a group reactive with a radically polymerizable group or may have either one of the groups. It is preferable that the component (A) has a radically polymerizable group of the same kind as the radically polymerizable group of the component (B). By setting the radically polymerizable group of the component (A) and the radically polymerizable group of the component (B) as similar functional groups, the reactivity between the component (A) and the component (B) is further increased, whereby a cured product excellent in appearance can be obtained. Here, the acryloyl group and the methacryloyl group are regarded as functional groups of the same type. As the component (A), at least one of silicone polyether acrylate and silicone acrylate is preferably used.

The component (A) is chemically bonded in the matrix of the photochromic resin layer. Since the component (A) is present bonded in the matrix of the photochromic resin layer, the orientation of the component (A) to the surface can be prevented or reduced, and the stability of the photochromic optical article can be maintained at a high level, whereby a photochromic optical article having good appearance can be obtained.

The component (A) is not particularly limited as long as it is a siloxane having an acyclic polysiloxane bond and a radically polymerizable group. In addition to the radically reactive group, the component (A) may contain a functional group that is not reactive. Examples of such non-reactive functional groups include an alkyl group having 1 to 20 carbon atoms, an alkoxy group having 1 to 20 carbon atoms, an aryl group having 4 to 10 carbon atoms, and a polymeric group having 2 to 20 carbon atoms. Specific examples of polymeric group having 2 to 20 carbon atoms include a polypropylene group, a polyether group, a polyethylene group, and a polyolefin group. The component (A) may contain plural kinds of these non-reactive functional groups, and preferably, it contains at least one functional group selected from the group consisting of an alkyl group having 1 to 20 carbon atoms, an alkoxy group having 1 to 20 carbon atoms, and a polymeric group having 2 to 20 carbon atoms. More preferably, the non-reactive functional group is at least one selected from the group consisting of a methyl group, a methoxy group, an ethoxy group, a phenyl group, a polypropylene group, and a polyether group.

Among them, a compound represented by a formula (8) below is preferred. Hereinafter, it may be simply referred to as "component (A8)"

[CF 4]

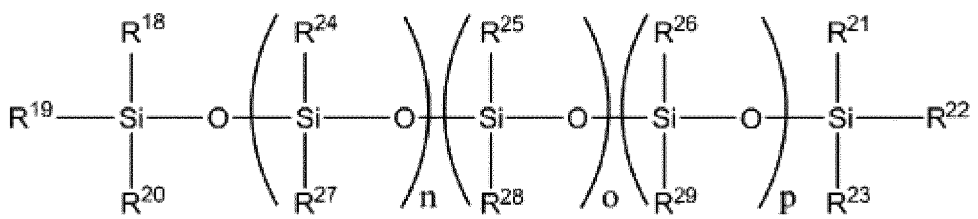

(8)

In the formula (8), n is a number from 0 to 20, preferably a number from 1 to 15; o is a number from 0 to 20, preferably a number from 1 to 15; and p is a number from 0 to 20, preferably a number from 1 to 15.

$R^{18}$, $R^{19}$, $R^{20}$, $R^{21}$, $R^{22}$, $R^{23}$, $R^{24}$, $R^{25}$, $R^{26}$, $R^{27}$, $R^{28}$ and $R^{29}$ are each a hydrogen atom, an alkyl group having 1 to 20 carbon atoms, an alkoxy group having 1 to 20 carbon atoms, a phenyl group, $-(CH_2)_\alpha OR^{30}$, $-(CH_2CH_2O)_\alpha R^{30}$, $-(CH(CH_3)CH_2O)_\alpha R^{30}$, $-(CH_2CH(CH_3)O)_\alpha R^{30}$, $-(CH_2)_qO-(CH_2CH_2O)_rR^{30}-$, $-(CH_2)_qO-(CH(CH_3)CH_2O)_rR^{30}$, $-(CH_2)_qO-(CH_2CH(CH_3)O)_rR^{30}$, $-(CH_2CH_2O)_q-(CH_2CH(CH_3)O)_rR^{30}$, $-(CH_2CH(CH_3)O)_q-(CH_2CH_2O)_rR^{30}$, $-(CH_2CH_2O)_q-(CH_2CH(CH_3)O)_r-(CH_2CH_2O)_sR^{30}$, $-(CH_2)_qO-(CH_2CH_2O)_r-(CH_2CH(CH_3)O)_sR^{30}$, $-(CH_2)_qO-(CH_2CH(CH_3)O)_r-(CH_2CH_2O)_sR^{30}$, $-(CH_2)_qO-(CH_2CH_2O)_r-(CH_2CH(CH_3)O)_s-(CH_2CH_2O)_zR^{30}$, an acryloyl group, a methacryloyl group, a vinyl group, a thiol group, an amino group, $-R^{31}NH_2$, an epoxy group, a group represented by the following formula (9), or a group represented by the following formula (10).

As the alkyl group having 1 to 20 carbon atoms, a methyl group or an ethyl group is preferred. As the alkoxy group having 1 to 20 carbon atoms, a methoxy group or an ethoxy group is preferred.

$R^{30}$ is a hydrogen atom, a methyl group, an ethyl group, an n-propyl group, or an isopropyl group.

$R^{31}$ is an alkylene group having 1 to 20 carbon atoms, or - $(CH_2)_\alpha O$-).

At least one of $R^{18}$ to $R^{29}$ is an acryloyl group, a methacryloyl group, a vinyl group, a thiol group, an amino group, -$R^{31}NH_2$, an epoxy group, a group represented by the following formula (9), or a group represented by the following formula (10) .

[CF 5]

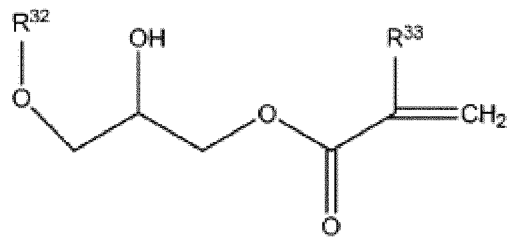

(9)

In the formula (9), $R^{32}$ is an alkylene group having 1 to 20 carbon atoms, -$(CH_2)_\alpha O$-, -$(CH_2CH_2O)_\alpha$-, or -$(CH_2CH(CH_3)O)_\alpha$-); $R^{32}$ is to be bonded to any Si of the formula (8).

$R^{33}$ is a hydrogen atom or a methyl group.

[CF 6]

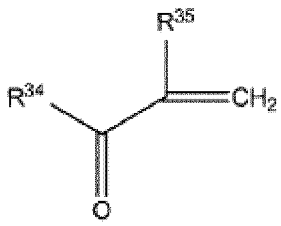

(10)

In the formula (10), $R^{34}$ is an oxygen atom, -$(CH_2)_\alpha O$-, -$(CH_2CH_2O)_\alpha$-, -$(CH(CH_3)CH_2O)_\alpha$-, -$(CH_2CH(CH_3)O)_\alpha$-, -$(CH_2)_qO$-$(CH_2CH_2O)_r$-, -$(CH_2)_qO$-$(CH(CH_3)CH_2O)_r$-, -$(CH_2)_qO$-$(CH_2CH(CH_3)O)_r$-, -$(CH_2CH_2O)_q$-$(CH_2CH(CH_3)O)_r$-, -$(CH_2CH(CH_3)O)_q$-$(CH_2CH_2O)_r$-, -$(CH_2CH_2O)_q$-$(CH_2CH(CH_3)O)_r$-$(CH_2CH_2O)_s$-, -$(CH_2)_qO$-$(CH_2CH_2O)_r$-$(CH_2CH(CH_3)O)_s$-, -$(CH_2)_qO$-$(CH_2CH(CH_3)O)_r$-$(CH_2CH_2O)_s$-, or -$(CH_2)_qO$-$(CH_2CH_2O)_r$-$(CH_2CH(CH_3)O)_s$-$(CH_2CH_2O)_z$-. $R^{34}$ is to be bonded to any of Si of the formula (8).

$R^{35}$ is a hydrogen atom or a methyl group.

In the formula (8), the formula (9) and the formula (10), $\alpha$ is a number from 1 to 20, preferably a number from 1 to 15; q, r, s, and z are each a number from 0 to 20; q+r is a number from 1 to 40; q+r+s is a number from 1 to 60; and q+r+s+z is a number from 1 to 80.

The radically polymerizable group and the group reactive with the radically polymerizable group in the siloxane preferably contain a (meth)acryloyl group.

The structure of the component (A8) and the type of functional group can be estimated, for instance, by ($^1$H-NMR spectrometry, infrared absorption (IR) spectrochemical analysis, and liquid chromatography mass spectrometry (LC-MS)).

As the component (A8), any commercially available product can be used.

Examples of the component (A8) having at least one functional group selected from the group consisting of a group represented by the formula (9), a group represented by the formula (10) and an acryloyl group include: TEGO (registered trademark, hereinafter shown as "TMR"), RAD2100, and TEG$^{TMR}$ RAD2300 manufactured by Evonik Japan Co., Ltd.; BYK$^{TMR}$-UV3505, BYK$^{TMR}$-UV3505, BYK$^{TMR}$-UV3510, BYK$^{TMR}$-UV3530, BYK$^{TMR}$-3550, BYK$^{TMR}$-3560, a BYK$^{TMR}$-UV3565, BYK$^{TMR}$-3566, BYK$^{TMR}$-UV3500, BYK$^{TMR}$-UV3535, BYK$^{TMR}$-UV3570, BYK$^{TMR}$-UV3575, and BYK$^{TMR}$-UV3576 manufactured by BYK Japan KK; and KR-513 and X-22-2445 manufactured by Shin-Etsu Chemical Co., Ltd.

Examples of component (A8) having a methacryloyl group include X-40-9296, X-22-164, X-22-164A, X-22-164B, X-22-164C, and X-22-164E manufactured by Shin-Etsu Chemical Co., Ltd.

Examples of component (A8) having a vinyl group include KR-511 manufactured by Shin-Etsu Chemical Co., Ltd.

Examples of component (A8) having an amino group include KF-8010, KF-8012, X-22-161A, X-22-161B, and KF-8008 manufactured by Shin-etsu Chemical Co., Ltd.; and DOWSIL$^{TMR}$ BY16-205, DOWSIL$^{TMR}$ BY16-213, DOWSIL$^{TMR}$ 16-849 Fluid, DOWSIL$^{TMR}$ 16-853U, DOWSIL$^{TMR}$ 16-871, DOWSIL$^{TMR}$ 16-879B, DOWSIL$^{TMR}$ 16-892, DOWSIL$^{TMR}$ FZ-3705, DOWSIL$^{TMR}$ FZ-3710 Fluid, DOWSIL$^{TMR}$ FZ-3785, and DOWSIL$^{TMR}$ SF-8417 Fluid manufactured by Dow Toray Co., Ltd.

Examples of component (A8) having a thiol (mercapto) group include KR-518, X-22-167B, X-22-167C, X-22-173BX and X-22-173DX manufactured by Shin-Etsu Chemical Co., Ltd.

Examples of component (A8) having an epoxy group include: KR-516, KR-517, X-24-9590, and X-41-1590A manufactured by Shin-Etsu Chemical Co., Ltd.; DOWSIL$^{TMR}$ BY16-839, DOWSIL$^{TMR}$ BY16-876, DOWSIL$^{TMR}$ FZ-3736 Fluid, DOWSIL$^{TMR}$ SF8411 Fluid, DOWSIL$^{TMR}$ SF8413 Fluid, DOWSIL$^{TMR}$ SF8421 Fluid, and DOWSIL$^{TMR}$ L-9300 manufactured by Dow Toray Co., Ltd.

Suitable blending ratio of the component (A)

The blending amount of the component (A) is not particularly limited, but preferably, 0.01 parts by mass or more and 10.0 parts by mass or less relative to 100 parts by mass of the component (B). When the amount of the component (A) is excessively large or excessively small, smoothness of the coating film of the curable composition may deteriorate, and a plurality of irregularities or the like may appear on the cured product, resulting in deterioration in appearance. In order to enhance the smoothness of the curable composition and to improve the appearance of the cured product, the amount of the component (A) is more preferably 0.05 parts by mass or more and 5.0 parts by mass or less, and still more preferably 0.10 parts by mass or more and 2.0 parts by mass or less.

The blending amount of the component (A) can be checked by the following method, for instance. In a case of calculating the amount of the component (A) with respect to the cured product as a photochromic resin layer or the curable composition, the cured product or the curable composition is dissolved first in an organic solvent to obtain a sample. This sample is purified by gel filtration column chromatography or the like to isolate the component (A). The isolated component (A) is analyzed by $^1$H-NMR spectrometry and liquid chromatography mass spectrometry(LC-MS), infrared absorption spectrochemcal (IR) analysis, and gas chromatography mass spectroscopy (GC-MS), so that the structure of component (A) can be identified and the content can be figured out.

In a case of using a single kind of component (B), the amount is set to 100 parts by mass . However, as described below, the component (B) may contain plural kinds of radically polymerizable monomers. In a case of using plural kinds of radically polymerizable monomers for the component (B), the total amount of these plurality of kinds of radically polymerizable monomers is set to 100 parts by mass.

<Component (B)>

The component (B) may be the main component of the curable composition according to the embodiment. In other words, the component (B) may be the main component of the matrix in a cured product obtained from the curable composition. The component (B) is a radically polymerizable monomer. As the radically polymerizable monomer, a monomer having at least one radically polymerizable group selected from the group consisting of an acryloyl group, a methacryloyl group, and a vinyl group, may be used.

It is preferred that the component (B) contains a polyfunctional (meth)acrylate having two or more (meth)acryloyl groups in a molecule. It is particularly preferable to contain a polyrotaxane having a (meth)acryloyl group, whose weight average molecular weight is 100,000 or more and 1,000,000 or less. Hereinafter, this polyrotaxane is also referred to as component (B1). Further, it is preferable that the component (B) contains a silsesquioxane having a radically polymerizable group that has a weight average molecular weight of 1,500 or more and 20,000 or less. Hereinafter, this silsesquioxane is also referred to as component (B2) . Further, it is more preferable that the component (B) contains both the component (B1) and the component (B2). When a curable composition comprising at least either the component (B1) or the component (B2) is used, a cured product having excellent mechanical properties and photochromic properties can be obtained.

Component (B1)

The component (B1) is a known compound having a structure as shown in Fig. 1. Fig. 1 is a schematic diagram showing an example of the molecular structure of polyrotaxane. The polyrotaxane 1 shown in Fig. 1 has a plurality of cyclic molecules 3, an axial molecule 2 penetrating inside the rings formed by the plurality of cyclic molecules 3, bulky terminal groups 4 modifying the terminals of the axial molecule 2, and side chains 5 to be bonded to the plurality of cyclic molecules 3. In Fig. 1, each cyclic molecule 3 has a plurality of side chains 5. Alternatively, only one side chain 5 may be bonded to the cyclic molecules 3. Since the component (B1) has a structure as shown in Fig 1, it can enhance flexibility

of the matrix of the cured product. Therefore, by using the component (B1), structural change of the photochromic compound is rarely hindered in the cured product, and the photochromic properties of the cured product tends to be improved.

For the axial molecule 2, various types of molecules are known. For instance, the axial molecule 2 may be linear or branched as long as it can penetrate the rings formed by the cyclic molecules 3, and usually the axial molecule 2 is formed of a polymer.

Examples of the polymer suitable for the axial molecule in the component (B1) include polyethylene glycol, polyisoprene, polyisobutylene, polybutadiene, polypropylene glycol, polytetrahydrofuran, polydimethyl siloxane, polyethylene, polypropylene, polyvinyl alcohol, and polyvinyl methyl ether. Among them, polyethylene glycol is most suitable.

Further, the groups to be formed at both ends of the axial molecule are not particularly limited as long as the groups can prevent the cyclic molecules from falling off the axial molecule, but preferably, they are bulky groups (bulky terminal groups 4 in Fig. 1) . The examples include an adamantyl group, a trityl group, a fluoresceynyl group, a dinitrophyl group, and a pyrenyl group. An adamantyl group is particularly suitable from the viewpoint of easy introduction, for instance.

The molecular weight of the axial molecule is not particularly limited. However, if the molecular weight is too large, compatibility with other components, e.g., other polymerizable monomers and the like, tends to deteriorate. If the molecular weight is too small, mobility of the cyclic molecules tends to decrease and the photochromic properties tends to deteriorate. From the viewpoint, it is suitable that the weight average molecular weight Mw of the axial molecule is in the range of 1000 to 100, 000, particularly 5000 to 80, 000, and particularly preferably 8000 to 30,000. The weight average molecular weight Mw is a value measured by GPC measuring method in Examples described later.

The cyclic molecules are not particularly limited as long as they make rings with a size to allow inclusion of the axial molecule as described above, and examples of the cyclic molecules include a cyclodextrin ring, a crown ether ring, a benzocrown ring, a dibenzocrown ring and a dicyclohexanocrown ring. Particularly, a cyclodextrin ring is preferred. The cyclodextrin ring includes an $\alpha$-form (ring inner diameter: 0.45 to 0.6 nm), a $\beta$-form (ring inner diameter: 0.6 to 0.8 nm), and a $\gamma$-form (ring inner diameter: 0.8 to 0.95 nm). Particularly, an $\alpha$-cyclodextrin ring and a $\gamma$-cyclodextrin ring are preferred, and an $\alpha$-cyclodextrin ring is most preferred.

A plurality of the cyclic molecules each having a ring as described above are clathrately contained in one axial molecule, but generally, when the maximal clathrate number of cyclic molecules capable of clathrate inclusion per axial molecule is set to 1, the number of clathrate of cyclic molecules is preferably in the range of 0.001 to 0.6, more preferably 0.002 to 0.5, and still more preferably 0.003 to 0.4. When the number of clathrate of the cyclic molecule is too large, since the cyclic molecules are densely present with respect to one axial molecule, the mobility thereof tends to be lowered and the photochromic properties of the cured product tends to be lowered. When the number of clathrates is too small, the gap between the axial molecules becomes narrow, and the flexibility to allow reversible reaction of the photochromic compound molecules decreases, and thus, the photochromic properties of the cured product tends to be lowered.

A polyrotaxane is used for the component (B1), which has a radically polymerizable group introduced into side chains 5 of a plurality of cyclic molecules 3 in Fig. 1. The component (B1) is obtained, for instance, by denaturing polyrotaxane having hydroxyl groups at the terminals of the side chains 5, by a known method.

The side chain having hydroxyl groups at the terminals is not particularly limited, but preferably, it is a side chain that has hydroxyl groups at the terminals and that is formed of by repeated organic chain comprising a long chain having 3 to 20 carbon atoms. The average molecular weight of the side chain may range from 300 to 10, 000, preferably from 350 to 8000, more preferably from 350 to 5000, and most preferably from 400 to 1500. The average molecular weight of this side chain can be adjusted by the use amount at the time of introduction of the side chain, and can be calculated. Alternatively, it can be determined from the result of $^1$H-NMR measurement.

The aforementioned side chains having hydroxyl groups at terminals may be introduced by modifying the functional groups of the cyclic molecules. For instance, the $\alpha$-cyclodextrin ring has 18 hydroxyl groups as functional groups, and the side chains are introduced via the hydroxyl groups. In other words, up to 18 side chains can be introduced per $\alpha$-cyclodextrin ring. In order to sufficiently exhibit the function of the side chain described above, it is preferable that 6% or more, particularly 30% or more of the total number of functional groups of the ring are modified with the side chains. The functional groups of the cyclic molecules may affect compatibility with other components. In particular, when the functional group is a hydroxyl group, it may impose a great influence on the compatibility with other components. Therefore, the ratio of the modified functional groups (modification degree) is preferably 6% or more and 80% or less, and more preferably 30% or more and 70% or less.

The side chain having hydroxyl groups at the terminals may be linear or branched as long as it has hydroxyl groups at the terminals. A desired side chain can be obtained by utilizing ring-opening polymerization; radical polymerization; cationic polymerization; anionic polymerization; or living radical polymerization such as atom-transfer radical polymerization, RAFT polymerization, and NMP polymerization, thereby introducing a side chain into a functional group of a cyclic molecule so that hydroxyl groups are provided to the terminals.

For instance, a side chain derived from a cyclic compound such as lactone or cyclic ether can be introduced

by ring-opening polymerization. The side chain introduced by ring-opening polymerization of the cyclic compound such as lactone or cyclic ether will have hydroxyl groups introduced into the terminals of the side chain.

Among the cyclic compounds, from the viewpoint of availability, high reactivity, and further easy adjustment of size (molecular weight), cyclic ether or a lactone compound is used preferably. A lactone compound is suitably used, and ε-caprolactone is preferred.

In a case of introducing the side chain by reacting the cyclic compound through ring-opening polymerization, poor reactivity of the functional group (e.g., hydroxyl group) bonded to the ring may cause difficulty in direct reaction of large molecules due to steric hindrance or the like. In such a case, for instance, in order to react the caprolactone or the like, hydroxypropylation is performed by reacting a low-molecular weight compound such as propylene oxide with a functional group so that a sufficiently reactive functional group (e.g., a hydroxyl group) is introduced into the terminal. After that, the aforementioned ring-opening polymerization using the ring compound is performed to introduce the side chain. In this case, the hydroxypropylated moiety can also be regarded as a side chain.

As for the component (B1), a hydroxyl group at a terminal of a side chain in the polyrotaxane is reacted with a compound having a radically polymerizable group to introduce the polymerizable groups into the terminals of a side chain of polyrotaxane. This reaction is referred to as "denaturation".

The compound having a radically polymerizable group is introduced by utilizing a side chain having hydroxyl groups at the terminals. For this purpose, a compound reactive with the hydroxyl groups of the side chain can be used as appropriate. In consideration of compatibility with other components, this compound having a radically polymerizable group is preferably a compound having no hydroxyl group in its molecule. As the radically polymerizable group, a (meth)acryloyl group is preferred.

A compound having a radically polymerizable group is a compound having in one molecule both a functional group capable of reacting with a hydroxyl group of a side chain and a polymerizable group. Examples of the functional group capable of reacting with a hydroxyl group include an isocyanate group, a carboxyl group, and an acid chloride group (e.g., a -COCl group). By reacting a compound having an isocyanate group, a radically polymerizable group is introduced via a urethane bond. Alternatively, by reacting a compound having a carboxyl group and an acid chloride group or the like, a radically polymerizable group is introduced via an ester bond.

For the reaction of the compound having a radically polymerizable group with the hydroxyl group at the side chain, conditions for a reaction between a hydroxyl group and a known functional group capable of reacting with a hydroxyl group may be employed.

As for the component (B1), the denaturation ratio of the radically polymerizable group to the hydroxyl group at the terminal of the side chain, that is, the reaction ratio of the compound having the radically polymerizable group to the mole number of the total hydroxyl groups of the side chain is preferably 1 mol% or more and less than 100 mol%. In consideration of the yield, the mechanical strength, the photochromic properties and the like of the obtained cured product, the denaturation ratio by the compound having the radically polymerizable group is more preferably 10 mol% or more and 95 mol% or less, still more preferably 30 mol% or more and 95 mol% or less. And particularly preferably, it is 70 mol% or more and 95 mol% or less in consideration of the productivity of the polyrotaxane compound itself.

The denaturation ratio can be calculated by (mole number with introduced polymerizable group)/(mole number of total hydroxyl group of side chain) $\times$ 100. It is also possible that the component (B2) is denatured with a compound having no radically polymerizable group as detailed below. Therefore, the remaining hydroxyl group of the side chain can also be denatured with a compound having no radically polymerizable group described in detail below. In this case, however, a hydroxyl group may remain since the denaturation ratio is high.

It is essential for the component (B1) that the hydroxyl group at the terminal of the side chain introduced into the cyclic molecule is denatured with a compound having a radically polymerizable group. The remaining hydroxyl group of the side chain (that is, a hydroxyl group present at the terminal of the side chain introduced into the cyclic molecule and not denatured with the compound having a radically polymerizable group) may remain a hydroxyl group or may be denatured with a compound having no radically polymerizable group.

The compound having no radically polymerizable group has in one molecule a functional group capable of reacting with a hydroxyl group of a side chain, and a radically polymerizable group is not contained in the molecule. Therefore, it is preferable that the compound having no radically polymerizable group has an alkyl group having 2 to 20 carbon atoms, an alkyleneoxy group having 2 to 30 carbon atoms, or an aryl group having 6 to 20 carbon atoms, instead of the radically polymerizable group. Examples of the functional group capable of reacting with the hydroxyl group of the side chain include the same functional groups as those described in the "compound having a radically polymerizable group".

As the compound having no radically polymerizable group, an isocyanate compound having 2 to 20 carbon atoms (excluding carbon atoms of isocyanate group) is preferred as a compound having an isocyanate group, from the viewpoint of availability of a raw material and high reactivity with a hydroxyl group. As the compound having no radically polymerizable group, a carboxylic acid chloride having 2 to 20 carbon atoms (excluding carbon atoms of a carbonyl group) is preferred as a carboxylic acid chloride from the viewpoint of availability of a raw material and high reactivity

with a hydroxyl group.

The denaturation ratio of the compound having no radically polymerizable group can be calculated by (mole number of introduced compound having no radically polymerizable group) / (mole number of total hydroxyl group of side chain) × 100. This denaturation ratio is not particularly limited. In consideration of the yield, mechanical strength, photochromic properties and the like of the obtained cured product, the denaturation ratio for the compound having no radically polymerizable group is preferably set to 0 to 99 mol%, more preferably 5 to 90 mol%, still more preferably 5 to 70 mol%, and particularly preferably 5 to 30 mol%.

Structure and molecular weight of suitable component (B1)

In the suitably used component (B1) among the respective components mentioned above, preferably, the axial molecule is polyethylene glycol bonded at the both ends with adamantyl groups, the cyclic molecule has an α-cyclodextrin ring, and, a side chain having at the terminals (meth)acryloyl groups is introduced by polycaprolactone into the cyclic molecule.

The weight average molecular weight Mw of the component (B1) is preferably in the range of 100,000 to 1,000,000. When the weight average molecular weight Mw of the component (B1) is within this range, compatibility with other component is improved, and transparency of the cured product can be further improved. In view of compatibility with other components, transparency and the like of the cured product, the weight average molecular weight Mw of the component (B1) is more preferably in the range of 100,000 to 800,000, and still more preferably in the range of 100,000 to 500,000. This weight average molecular weight Mw is a value measured by GPC measuring method described in the following Examples.

Particularly suitable component (B1) is as follows. That is, preferably, the molecular weight of the axial molecule is 8000 to 30,000; the introduction ratio of the α-cyclodextrin ring is in the range of 0. 003 to 0.4; and the ratio of the modified α-cyclodextrin ring (modification degree) is 30% or more and 70% or less. Further, it is preferable that the α-cyclodextrin ring has a side chain having an average molecular weight in a range of 400 to 1,500, and a denaturation ratio of (meth)acryloyl group in this side chain is set to 70 mol% or more and 95 mol% or less. These numerical values show that the number of (meth)acryloyl groups per molecule of the component (B1) is preferably 10 to 1000.

Compounding amount of component (B1)

The amount of the component (B1) is preferably 0 to 30 parts by mass, more preferably 0.1 to 20 parts by mass, and still more preferably 0.5 to 10 parts by mass, relative to 100 parts by mass of the component (B).

Component (B2)

The component (B2) is a radically polymerizable monomer having silicon in its molecule and having a bifunctional or polyfunctional (meth)acryloyl group. As the component (B2), a silsesquioxane having one kind of structure may be used, or a mixture of silsesquioxanes having a plurality of structures may be used. The silsesquioxane has a variety of molecular structures, such as cage-like, ladder-like, and random. Since the component (B2) has a cyclic a siloxane structure, it may reduce the surface tension of the curable composition. Therefore, when a curable composition containing the component (B2) is used, smoothness of a coating film of the curable composition is increased, and a cured product having further favorable appearance tends to be obtained.

As the component (B2), a silsesquioxane having a (meth)acryloyl group and having a weight average molecular weight of 1500 or more and 20,000 or less is preferably used.

As the component (B2), a component represented by a formula (6) below is preferably used.

[CF 7]

$$(\mathbf{R^{15}\text{-}SiO_{3/2}})_k \qquad \mathbf{(6)}$$

(In the formula, k is a polymerization degree and an integer from 3 to 100; and a plurality of $R^{15}$ may be the same or different from each other, and each is an organic group containing at least two (meth)acryloyl groups, provided that $R^{15}$ does not contain a group containing a chain-like organosiloxane group.)

Here, an organic group containing a (meth) acryloyl group in $R^{15}$ may contain only a (meth) acryloyl group (a (meth) acryloyl group may be bonded directly to a silicon atom) . Specifically, the (meth) acryloyl group may contain not only a (meth) acryloyl group but also a (meth)acryloxypropyl group and a (3-(meth)acryloxypropyl)dimethylsiloxy group. Among them, the (meth)acryloxypropyl group is particularly preferred because a raw material therefor can be easily obtained at the time of producing the component (B2), and a high film strength can be obtained while exhibiting excellent photochromic properties.

The weight average molecular weight Mw of the component (B2) is preferably from 1500 to 20, 000, and the (meth) acrylic equivalent is preferably from 150 to 800. The weight average molecular weight Mw of the component (B2) is a value measured by a gel permeation chromatography (GPC).

The component (B2) preferably contain 10 or more (meth)acryloyl groups in one molecule on average. Particularly, 10 to 100 (meth)acryloyl groups are preferably contained in one molecule, and further preferably, 15 to 35 (meth)acryloyl groups are contained.

The component (B2) can be produced in accordance with the synthesizing method described in the cited documents (see Appl. Organometal. Chem., 2001, p.683-692) and Patent Documents (JP 2004-143449 A and JP 1999-29640 A)), for instance.

Blending amount of component (B2)

When the amount of the component (B) is set to 100 parts by mass, the amount of the component (B2) is preferably set to 0 to 10 parts by mass, more preferably 0.1 to 8 parts by mass, and still more preferably 0.1 to 6 parts by mass.

Component (B3)

The component (B) preferably contains a component (B3) as another radical polymerizable monomer in addition to the component (B1) and the component (B2). The radically polymerizable group of the component (B3) is preferably a (meth)aryloyl group. Examples of the component (B3) include the following three kinds of acrylates.

Bifunctional (meth)acrylate having two (meth)acryloyl groups in a molecule (hereinafter, this may be simply referred to as component (B31))

Polyfunctional (meth)acrylate having three or more (meth)acryloyl groups in a molecule (hereinafter, this may be simply referred to as component (B32))

Monofunctional (meth)acrylate having one (meth) acryloyl group (hereinafter, this may be simply referred to as component (B33))

Component (B31)

Specific examples of the component (B31) include a component represented by the following formula (1) (hereinafter, this may be simply referred to as a component (B31a)), a component represented by the following formula (2) (hereinafter, this may be simply referred to as a component (B31b)), and a component represented by the following formula (3) (hereinafter, this may be simply referred to as component (B31c)), and a bifunctional (meth)acrylate component having a urethane bond (hereinafter, this may be simply referred to as component (B31d)). Examples of the component (B31) include component (B31a), the component (B31b), the component (B31c), and a bifunctional (meth) acrylate component that does not correspond to the component (B31d) (hereinafter, this may be also referred to as component (B31e)).

Component (B31a)

[CF 8]

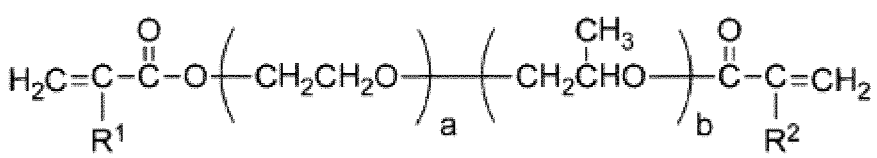

(1)

(In the formula, $R^1$ and $R^2$ are each a hydrogen atom or a methyl group, 'a' and 'b' are each independently an integer of 0 or more, and a+b is an integer of 2 or more.)

Specific examples of the compound represented by the above formula (1) are as follows.

Diethylene glycol dimethacrylate, triethylene glycol dimethacrylate, tetraethylene glycol dimethacrylate, pentaethylene glycol dimethacrylate, pentapropylene glycol dimethacrylate, diethylene glycol diacrylate, triethylene glycol diacrylate, tetraethylene glycol diacrylate, pentaethylene glycol diacrylate, tripropylene glycol diacrylate, tetrapropylene glycol diacrylate, pentapropylene glycol diacrylate, dimethacrylate consisting of a mixture of polypropylene glycol and

polyethylene glycol (polyethylene and polypropylene each has two repeating units), polyethylene glycol dimethacrylate (particularly a = 4, b = 0, average molecular weight: 330), polyethylene glycol dimethacrylate (particularly a = 9, b = 0, average molecular weight: 536), polyethylene glycol dimethacrylate (particularly a = 14, b = 0, average molecular weight: 736), tripropylene glycol dimethacrylate, tetrapropylene glycol dimethacrylate, polypropylene glycol dimethacrylate (particularly a = 0, b = 7, average molecular weight: 536), polyethylene glycol diacrylate (particularly, average molecular weight: 258), polyethylene glycol diacrylate (particularly a = 4, b = 0, average molecular weight: 308), polyethylene glycol diacrylate (particularly a = 9, b = 0, average molecular weight: 508), polyethylene glycol diacrylate (particularly a = 14, b = 0, average molecular weight: 708), and polyethylene glycol methacrylate acrylate (particularly a = 9, b = 0, average molecular weight: 522)

Component (B31b)

[CF 9]

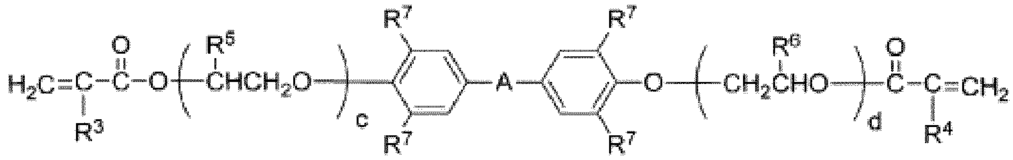

(2)

(In the formula,

$R^3$ and $R^4$ are each a hydrogen atom or a methyl group,
$R^5$ and $R^6$ are each a hydrogen atom or a methyl group,
$R^7$ is a hydrogen atom or a halogen atom,
'A' is -O-, -S-, $-(SO_2)-$, -CO-, $-CH_2-$, -CH=CH-, $-C(CH_3)_2-$, or $-C(CH_3)(C_6H_5)-$,
c and d are each an integer of 1 or more, and c+d is 2 or more and 30 or less on average.) The bifunctional (meth) acrylate represented by the above formula (2) is usually obtained in the form of a mixture of molecules having different molecular weights. Therefore, c and d are indicated as average values.

Specific examples of the bifunctional (meth)crylate represented by the formula (2) include, for instance, the following bisphenol A di(meth)acrylates.

2,2-bis[4-(methacryloyloxyethoxy)phenyl]propane (c+d=2, average molecular weight: 452)
2,2-bis[4-(methacryloyloxydiethoxy)phenyl]propane (c+d=4, average molecular weight: 540)
2,2-bis[4-(methacryloyloxypolyethoxy)phenyl]propane (c+d=7, average molecular weight: 672)
2,2-bis[3,5-dibromo-4-(methacryloyloxyethoxy)phenyl] propane (c+d=2, average molecular weight: 768)
2,2-bis(4-(methacryloyloxydipropoxy)phenyl)propane (c+d=4, average molecular weight: 596)
2,2-bis[4-(acryloyloxydiethoxy)phenyl]propane (c+d=4, average molecular weight: 512)
2,2-bis[4-(acryloyloxypolyethoxy)phenyl]propane (c+d=3, average molecular weight: 466)
2,2-bis[4-(acryloyloxypolyethoxy)phenyl]propane (c+d=7, average molecular weight: 642)
2,2-bis[4-(methacryloyloxypolyethoxy)phenyl]propane (c+d=10, average molecular weight: 804)
2,2-bis[4-(methacryloyloxypolyethoxy)phenyl]propane (c+d=17, average molecular weight: 1116)
2,2-bis[4-(methacryloyloxypolyethoxy)phenyl]propane (c+d=30, average molecular weight: 1684)
2,2-bis[4-(acryloyloxypolyethoxy)phenyl]propane (c+d=10, average molecular weight: 776)
2,2-bis[4-(acryloyloxypolyethoxy)phenyl]propane (c+d=20, average molecular weight: 1216)

Component (B31c)

[CF 10]

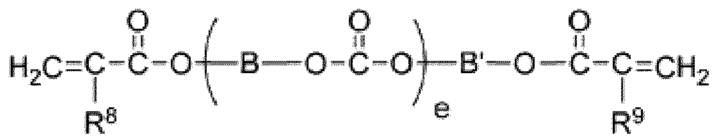

(3)

(In the formula,

$R^8$ and $R^9$ are each a hydrogen atom or a methyl group,
e is a number from 1 to 20 on average,
B and B' may be the same or different from each other, and each is a linear or branched alkylene group having 2 to 15 carbon atoms, and in a case where a plurality of B are present, the plurality of B may be the same or different groups.)

The bifunctional (meth) acrylate represented by the above formula (3) can be produced by reacting polycarbonate diol with (meth)acrylic acid.

Examples of polycarbonate diol used here will be described below. Specific examples include: polycarbonate diol obtained by phosgenation of trimethylene glycol (average molecular weight: 500 to 2000), polycarbonate diol obtained by phosgenation of tetramethylene glycol (average molecular weight: 500 to 2000), polycarbonate diol obtained by phosgenation of pentamethylene glycol (average molecular weight: 500 to 2000), polycarbonate diol obtained by phosgenation of hexamethylene glycol (average molecular weight: 500 to 2000), polycarbonate diol obtained by phosgenation of octamethylene glycol (average molecular weight: 500 to 2000), polycarbonate diol obtained by phosgenation of nonamethylene glycol (average molecular weight: 500 to 2000), polycarbonate diol obtained by phosgenation of triethylene glycol and tetramethylene glycol (average molecular weight: 500 to 2000), polycarbonate diol obtained by phosgenation of tetramethylene glycol and hexamethylene diglycol (average molecular weight: 500 to 2000), polycarbonate diol obtained by phosgenation of pentamethylene glycol and hexamethylene glycol (average molecular weight: 500 to 2000), polycarbonate diol obtained by phosgenation of tetramethylene glycol and octamethylene glycol (average molecular weight: 500 to 2000), polycarbonate diol obtained by phosgenation of hexamethylene glycol and octamethylene glycol (average molecular weight: 500 to 2000), and polycarbonate diol obtained by phosgenation of 1-methyltrimethylene glycol (average molecular weight: 500 to 2000) .

Component (B31d)

The component (B31d) is typically a reactant of a polyol and a polyisocyanate. Examples of the polyisocyanate include hexamethylene diisocyanate, isophorone diisocyanate, lysine isocyanate, 2,2,4-hexamethylene diisocyanate, dimer acid diisocyanate, isopropylidene bis-4-cyclohexyl isocyanate, dicyclohexylmethane diisocyanate, norbornene diisocyanate, or methylcyclohexane diisocyanate.

Examples of the polyol include: polyalkylene glucols having repeating units of ethylene oxide, propylene oxide, or hexamethylene oxide having 2 to 4 carbon atoms; or polyester diols such as polycaprolactone diol. Further examples include: polycarbonate diol, polybutadiene diol, or pentaerythritol, ethylene glycol, propylene glycol, 1,3-propanediol, 1,4-butanediol, 1,5-pentanediol, 1,6-hexanediol, 1,9-nonanediol, 1,8-nonanediol, neopentyl glycol, diethylene glycol, dipropylene glycol, 1,4-cyclohexanediol, 1,4-cyclohexanedimethanol, glycerin, and trimethylolpropane.

Furthermore, reaction mixtures or the like also can be used. An example thereof is obtained by preparing a urethane prepolymer through a reaction of these polyisocyanates and polyols and further reacting with 2-hydroxy(meth)acrylate. Another example is urethane (meth) acrylate, which is a reaction mixture obtained by directly reacting diisocyanate with 2-hydroxy(meth)acrylate.

Examples of the bifunctional ingredients include commercially available products such as: U-2PPA (molecular weight: 482), UA-122P (molecular weight: 1100), and U-122P (molecular weight: 1100) manufactured by SHIN-NAKAMURA CHEMICAL Co., Ltd.; EB4858 (molecular weight: 454) manufactured by Daicel UCB; TEAI-1000 and TE-2000 manufactured by NIPPON SODA CO., LTD.; and CN9014 manufactured by Arkema S.A.

Component (B31e)

Examples of the component (B31e) include compounds each having (meth)acryloyl groups at both terminals of an alkylene group that may have a substituent. Among them, compounds each having an alkylene group having 6 to 20 carbon atoms are preferred. Specific examples thereof include 1,6-hexanediol diacrylate, 1,6-hexanediol dimethacrylate, 1,9-nonanediol diacrylate, 1,9-nonanediol dimethacrylate, 1,10-decanediol diacrylate, and 1,10-decanediol dimethacrylate.

Another examples of the component (B31e) is butadiene di(meth)acrylate represented by a formula (4) below.

[CF 11]

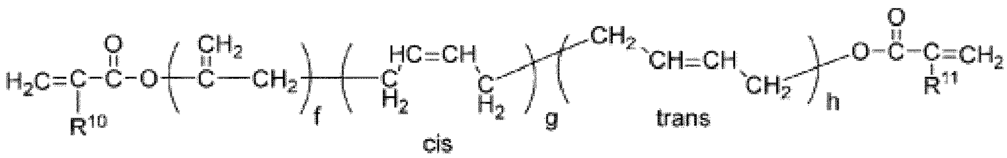

(4)

(In the formula,

$R^{10}$ and $R^{11}$ are each a hydrogen atom or a methyl group;
f, g and h are each independently an integer of 0 or more;

and f+g+h is an integer of 1 or more.)

The bifunctional (meth) acrylate represented by the above formula (4) is not particularly limited, and examples thereof include butadiene di(meth)acrylate as commercially available products such as BAC-45 manufactured by OSAKA ORGANIC CHEMICAL INDUSTRY LTD. and CN307 manufactured by Arkema S.A.

Examples of the component (B31e) further include bifunctional (meth)acrylate that may contain a sulfur atom. Preferably, the sulfur atom constitutes a part of the molecular chain, as a sulfide group. Specific examples thereof include: bis(2-methacryloyloxyethylthioethyl) sulfide, bis(methacryloyloxyethyl) sulfide, bis(acryloyloxyethyl) sulfide, 1,2-bis(methacryloyloxyethylthio)ethane, 1,2-bis(acryloyloxyethyl) ethane, bis(2-methacryloyl oxyethylthioethyl) sulfide, bis(2-acryloyloxy ethylthioethyl) sulfide, 1,2-bis(methacryloyloxy ethylthioethylthio) ethane, 1,2-bis(acryloyloxy ethylthio ethylthio)ethane, 1,2-bis(methacryloyloxy isopropyl thioisopropyl)sulfide, and 1,2-bis(acryloyloxy isopropyl thioisopropyl)sulfide.

For each of the component (B31a), the component (B31b), the component (B31c), the component (B31d) and the component (B31e), a single component may be used, or plural kinds of components may be used. In a case of using plural kinds of components, the mass to make the standard of the component (B31) is the total amount of the plurality of components. Although not particularly limited, when the total amount of the component (B31) is set to 100 parts by mass, preferably the component (B31a) is 30 to 100 parts by mass, the component (B31b) is 0 to 70 parts by mass, the component (B31c) is 0 to 70 parts by mass, the component (B31d) is 0 to 70 parts by mass, and the component (B31e) is 0 to 70 parts by mass. More preferably, the component (B31a) is 40 to 95 parts by mass, preferably the component (B31b) is 0 to 50 parts by mass, the component (B31c) is 5 to 60 parts by mass, the component (B31d) is 0 to 50 parts by mass, and the component (B31e) is 0 to 50 parts by mass.

Component (B32)

Examples of the component (B32) include a component represented by the following formula (5) (hereinafter, this may be simply referred to as component (B32a)), a polyfunctional (meth)acrylate having a urethane bond (hereinafter, this may be simply referred to as component (B32b)), and a polyfunctional (meth) acrylate (hereinafter, this may be simply referred to as component (B32c)) corresponding neither to the component (B32a) or the component (B32b)).

Component (B32a)

[CF 12]

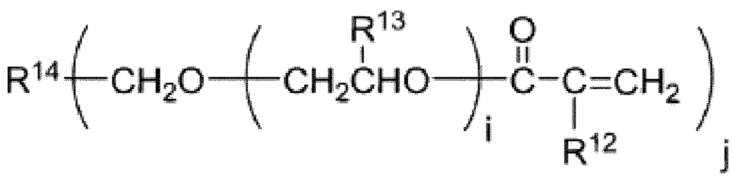

(5)

(In the formula,

$R^{12}$ is a hydrogen atom or a methyl group,
$R^{13}$ is a hydrogen atom or an alkyl group having 1 or 2 carbon atoms,
$R^{14}$ is a tri- to hexavalent organic group having 1 to 10 carbon atoms,
'i' is a number from 0 to 3 on average, and 'j' is a number from 3 to 6.)

For the alkyl group having 1 or 2 carbon atoms represented by $R^{13}$, a methyl group is preferred. Examples of the organic group represented by $R^{14}$ include a group derived from a polyol, a tri- to hexavalent hydrocarbon group, and an organic group containing a tri- to hexavalent urethane bond.

Specific examples of the compound represented by the formula (5) are as follows.

Trimethylolpropane trimethacrylate, trimethylolpropane triacrylate, tetramethylolmethane trimethacrylate, tetramethylolmethane triacrylate, tetramethylolmethane tetramethacrylate, tetramethylolmethane tetraacrylate, trimethylolpropane triethylene glycol trimethacrylate, trimethylolpropane triethylene glycol triacrylate, ditrimethylolpropane tetramethacrylate, ditrimethylolpropane tetraacrylate, pentaerythritol tetraacrylate, and dipentaerythritol hexaacrylate.

Component (B32b)

The component (B32b) is obtained by reacting the polyisocyanate compound explained regarding the component (B31d) and a polyol compound. This compound has three or more (meth) acryloyl groups in a molecule. Examples of commercially available product thereof include U-4HA (molecular weight: 596, number of functional groups: 4), U-6HA (molecular weight: 1019, number of functional groups: 6), U-6LPA (molecular weight: 818, number of functional groups: 6), and U-15HA (molecular weight: 2300, number of functional groups: 15) manufactured by SHIN-NAKAMURA CHEMICAL Co., Ltd.

Component (B32c)

Examples of the component (B32c) include a compound obtained by modifying a terminal of a polyester compound with a (meth)acryloyl group. Various commercially available polyester (meth)acrylate compounds can be used in accordance with the molecular weight of the polyester compound serving as a raw material and the amount of modification of the (meth)acryloyl group. Specific examples thereof include a tetrafunctional polyester oligomer (EB80 or the like having molecular weight from 2500 to 3500, supplied by Daicel UCB), a hexafunctional polyester oligomer (EB450 or the like having molecular weight from 6000 to 8000, supplied by Daicel UCB), a hexafunctional polyester oligomer (EB1830 or the like having molecular weight from 45,000 to 55,000, supplied by Daicel UCB), and a tetrafunctional polyester oligomer (particularly, GX8488B or the like having a molecular weight of 10,000, supplied by DKS Co., Ltd.). Further examples of commercially available product include CN2300, CN2301, CN2302, CN2303, CN2304, SB401, SB402, SB404, SB500E50, SB500K60, SB510E35, SB520E35, SB520M35, CN550 and CN551 manufactured by Arkema S.A.; and A-DPH-6E, A-DPH-12E, A-DPH-6EL, A-DPH-12EL and A-DPH-6P manufactured by SHIN-NAKAMURA CHEMICAL Co., Ltd.

By using the components (B32) (component (B32a), component (B32b) and component (B32c)) exemplified above, the crosslink density is improved by polymerization, and the surface hardness of the obtained cured product can be increased. Therefore, in particular, in a case of using a photochromic cured product (laminate) obtained by a coating method, the component (B32) is preferably contained.

For each of the component (B32a), the component (B32b) and the component (B32c), a single component can be used, or plural kinds of components can be used. In a case of using plural kinds of components, the mass to make the standard of the component (B32) is the total amount of the plurality of components. Although not particularly limited, when the total amount of the component (B32) is set to 100 parts by mass, preferably the component (B32a) is 50 to 100 parts by mass, the component (B32b) is 0 to 50 parts by mass, and the component (B32c) is 0 to 50 parts by mass.

Component (B33)

Examples of the component (B33) include a compound represented by a formula (7) below.

[CF 13]

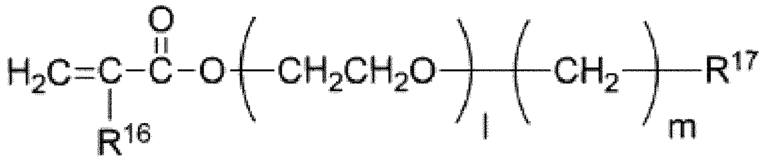

(7)

(In the formula,

$R^{16}$ is a hydrogen atom or a methyl group,
$R^{17}$ is a hydrogen atom, a methyldimethoxysilyl group, a trimethoxysilyl group, or a glycidyl group,
'l' is an integer from 0 to 10, and 'm' is an integer from 0 to 20.)

Specific examples of the compound represented by the above formula (7) are as follows.

Methoxypolyethylene glycol methacrylate (particularly, average molecular weight: 293), methoxypolyethylene glycol methacrylate (particularly, average molecular weight: 468), methoxypolyethylene glycol acrylate (particularly, average molecular weight: 218), methoxypolyethylene glycol acrylate (particularly, average molecular weight: 454), stearyl methacrylate, lauryl methacrylate, methyl acrylate, ethyl acrylate, butyl acrylate, octyl acrylate, lauryl acrylate, γ-methacryloyloxypropyltrimethoxysilane, γ-methacryloyloxypropylmethyldimethoxysilane, glycidyl methacrylate, tridecyl acrylate, tridecyl methacrylate, isooctyl acrylate, isooctyl methacrylate, isodecyl acrylate, and isodecyl methacrylate.

Suitable blending ratio of component (B)

It is preferable that the component (B) includes component (B1), component (B2), and component (B3).

In a case where the component (B) consists of the component (B3), when the total amount of the component (B) is set to 100 parts by mass, preferably the component (B31) is 30 to 80 parts by mass, the component (B32) is 10 to 60 parts by mass, and the component (B33) is 0.1 to 20 parts by mass. Further preferably, the component (B31) is 40 to 75 parts by mass, the component (B32) is 15 to 55 parts by mass, and the component (B33) is 0.5 to 10 parts by mass.

In a case where the component (B) comprises the component (B1) but not the component (B2), when the amount of the component (B) is set to 100 parts by mass, preferably the component (B1) is 0.1 to 20 parts by mass, the component (B31) is 30 to 80 parts by mass, the component (B32) is 10 to 60 parts by mass, and the component (B33) is 0.1 to 10 parts by mass. Further preferably, the component (B1) is 0.5 to 10 parts by mass, the component (B31) is 40 to 75 parts by mass, the component (B32) is 15 to 55 parts by mass, and the component (B33) is 0.5 to 10 parts by mass.

In a case where the component (B) comprises the component (B2) but not the component (B1), when the amount of the component (B) is set to 100 parts by mass, preferably the component (B2) is 0.1 to 8 parts by mass, the component (B31) is 30 to 80 parts by mass, the component (B32) is 10 to 60 parts by mass, and the component (B33) is 0.1 to 20 parts by mass. Further preferably, the component (B2) is 0.1 to 6 parts by mass, the component (B31) is 40 to 75 parts by mass, the component (B32) is 15 to 55 parts by mass, and the component (B33) is 0.5 to 10 parts by mass.

In a case where the component (B) comprises both the component (B1) and the component (B2), when the amount of the component (B) is set to 100 parts by mass, preferably, the component (B1) is 0.1 to 20 parts by mass, the component (B2) is 0.1 to 8 parts by mass, the component (B31) is 30 to 80 parts by mass, the component (B32) is 10 to 60 parts by mass, and the component (B33) is 0.1 to 20 parts by mass. Further preferably, the component (B1) is 0.5 to 10 parts by mass, the component (B2) is 0.1 to 6 parts by mass, the component (B31) is 40 to 75 parts by mass, the component (B32) is 15 to 55 parts by mass, and the component (B33) is 0.5 to 10 parts by mass.

The SP value of the component (B) is preferably 7.0 to 12.0 in view of compatibility with other components, solubility, coatability of the photochromic curable composition and applicability to the polyurethane resin layer laminated on the optical substrate. The SP value of the component (B) can be determined by titration according to the turbidimetric titration described in detail below. The SP value can be calculated in accordance with the description of the solubility parameter δ in Handbook of Chemistry Applied Edition by the Chemical Society of Japan (published in 1973) and Polymer Handbook (4th edition, edited by Johannnes Brandrup and E.H.Immergut, published in 1998).

It is estimated that the excellent effect is exhibited since the SP value of the component (B) and the SP value of the component (A) are approximate to each other. In order to exhibit a further favorable effect, the SP value of the component (B) is more preferably in a range of 7.5 to 12.0, still more preferably 7.5 to 11.5, and particularly preferably 8.0 to 11.0.

<Component (C)>

As the component (C), any known components can be used without any substantial limitations, and the component can be used alone or in combination of two more of the components.

Typical photochromic compounds are fulgide compounds, chromene compounds and spirooxazine compounds, which are disclosed in many documents, for instance, JP H02-28154 A, JP S62-288830 A, WO94/22850 pamphlet, WO96/14596 pamphlet, or the like.

Among the known photochromic compounds, a chromene compound having an indeno[2,1-f]naphtho[1,2-b]pyran skeleton may be used more preferably from the viewpoint of photochromic properties such as color optical density, initial colorability, durability, and fading rate. Particularly, a chromene compound having a molecular weight of 540 or more is suitably used because it is particularly excellent in color optical density and fading rate.

Chromene compounds shown below are the examples of chromene compound particularly suitably used in the present invention, but the present invention is not limited thereto.

[CF 14]

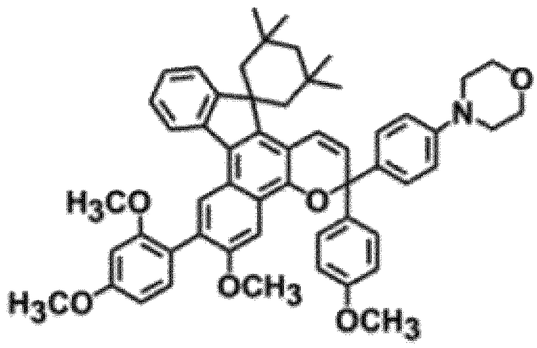

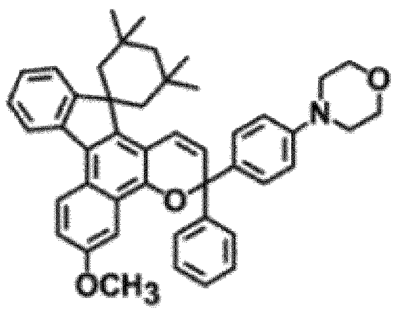

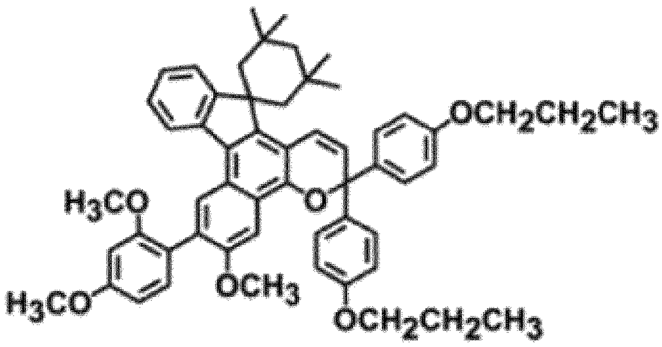

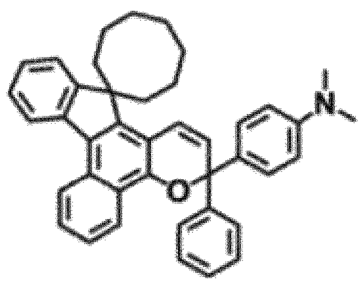

In addition to that, a photochromic compound having an oligomer chain group in a molecule can also be suitably used. Photochromic compounds having such oligomer chain groups are disclosed in many documents such as WO2000/015630 pamphlet, WO2004/041961 pamphlet, WO2009/146509 pamphlet, WO2012/149599 pamphlet, WO2012/162725 pamphlet, WO2013/078086 pamphlet, WO2019/013249 pamphlet, and WO2019/203205 pamphlet. Among the photochromic compounds having an oligomer chain group in the molecule, photochromic compounds having oligomer chain groups as described in WO2019/013249 pamphlet and WO2019/203205 pamphlet are preferably used because both exhibit further favorable photochromic properties and durability. The following photochromic compound having an oligomer chain group is an example of compounds to be used particularly suitably, though the present invention is not limited thereto.

[CF 15]

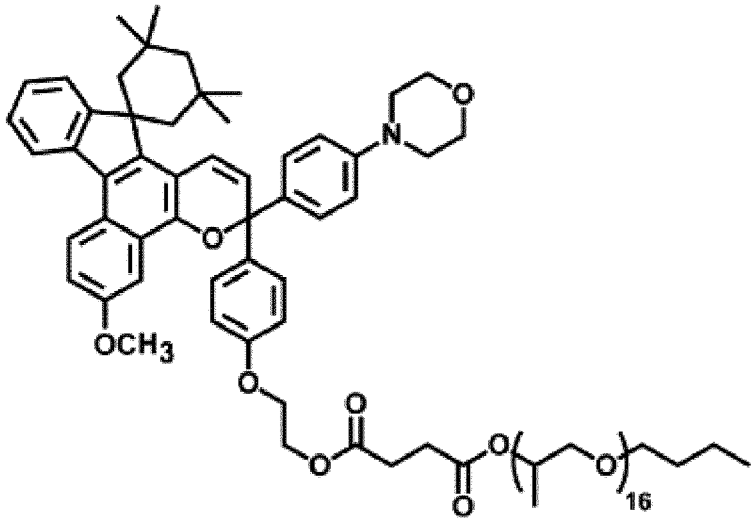

Further, as the component (C), a compound having as a substituent a group containing a long chain that has a molecular weight of 300 or more may be used. Note that a molecular weight of 300 or more refers to a molecular weight of a moiety limited to the long chain. Preferred examples of the long chain is at least one group selected from the group consisting of a polysiloxane chain, a polyoxyalkylene chain, a polyester chain and a polyester polyether chain. The long chain having a molecular weight of 300 or more may be composed of one kind of repeating structure, and may be a block copolymer or a graft copolymer of plural kinds of repeating structures. In a case where the long chain is a copolymer having a plurality of repeating structures, the molecular weight of the long chain indicates an average molecular weight of the respective repeating structures. This average value is a number average molecular weight. This molecular weight can be confirmed by the type of raw material at the time of producing the photochromic compound. In a case of confirming it from a product, it can be obtained by a known technique such as NMR, IR, or mass spectrometry.

It is considered that further favorable photochromic properties can be exhibited in the component (B) when the component (C) has a long chain group having a molecular weight of 300 or more. The molecular weight of the group of the long chain is preferably from 300 to 25,000, more preferably from 400 to 20,000, still more preferably from 440 to 15,000, and particularly preferably from 500 to 10,000, taking into consideration the photochromic properties, the blending amount thereof, and the productivity of the component (C) itself.

The number of groups of the long chain is preferably at least 0.5 with respect to one molecule of the photochromic compound. In other words, it is possible to use a photochromic compound having a structure where two photochromic moieties are bonded to each other via a group including a long chain. The number of groups of the long chain per molecule of the photochromic moiety is preferably 4 or less, more preferably 2 or less, and still more preferably 1 in consideration of the balance with the molecular weight of the molecular chain, the photochromic properties, and the like.

The compounding amount of the component (C) is preferably as follows in consideration of the photochromic properties such as the color optical density and the fading rate of the obtained photochromic cured product. In other words, when the component (B) is set to 100 parts by mass, the compounding amount of the component (C) is preferably 0.001 parts by mass or more and 20 parts by mass or less, more preferably 0.05 parts by mass or more and 15 parts by mass or less, and still more preferably 0.1 parts by mass or more and 10 parts by mass or less.

<Component (D)>

The photochromic curable composition according to the embodiment may further contain an organic compound having a boiling point of 80°C or higher and 200°C or lower and SP value of 8.0 to 10.0. Hereinafter, this organic compound is also referred to as component (D). The SP value here indicates a value that may be also referred to as a solubility parameter or a Hildebrand parameter.

The appearance of the cured product can be improved by using a curable composition containing the component (D) . That is, since the component (D) has a relatively high boiling point, it may remain in a trace amount in the cured product. Since the component (D) has an SP value within the above range, it is highly compatible with the acrylic adhesive in the aforementioned protective film. Therefore, when the acrylic adhesive flowing out of the adhesive surface of the protective film permeates the photochromic resin layer, the component (D) remaining in a trace amount in the photochromic resin layer may be compatible with the acrylic adhesive that is a foreign matter. This can prevent the acrylic adhesive from aggregating in the photochromic resin layer. As a result, appearance defects like fine streaks or stripes may less likely occur. Such defects found inside the photochromic resin layer are derived from the acrylic adhesive.

The SP value of the component (D) is preferably 8.0 to 9.5, and more preferably 8.0 to 9.0. When the SP value of the component (D) falls within this range, coatability of the curable composition can be improved, and thus, the productivity tends to increase.

The boiling point of the component (D) is preferably 85°C or higher and 200°C or lower, more preferably, 95°C or higher and 200°C or lower, and still more preferably, 110°C or higher and 170°C or lower. When the boiling point of the component (D) is high, the appearance of the cured product tends to be improved. When the boiling point of the component (D) is low, adhesion and durability of the cured product tend to be increased.

The component (D) is not particularly limited as long as its SP value and boiling point fall within the ranges. The following organic compounds are preferred in view of compatibility with the suitable component (B) described below. Specific examples of suitable organic compounds are as follows:

aromatic compounds such as toluene (boiling point: 111°C, SP value: 8.8), xylene (boiling point: 138°C, SP value: 8.7), and styrene (boiling point: 145°C, SP value: 8.5);
ketone compounds such as methyl propyl ketone (boiling point: 105°C, SP value: 8.7), methyl isopropyl ketone (boiling point: 95°C, SP value: 8.5), diethyl ketone (boiling point: 101°C, SP value: 8.8), and methyl isobutyl ketone (boiling point: 116°C, SP value: 8.4);
ester compounds such as butyl acetate (boiling point: 124°C, SP value: 8.5), isopropyl acetate (boiling point: 89°C, SP value: 8.4), isobutyl acetate (boiling point: 116°C, SP value: 8.3), and ethyl acetate (boiling point: 80°C, SP value: 9.1);
ether compounds such as diethylene glycol dimethyl ether (boiling point: 162°C, SP value 9.9), and propylene glycol monomethyl ether (boiling point: 120°C, SP value: 9.1); and
cyclic alkyl compounds such as cyclohexane (boiling point: 81°C, SP value: 8.2) . Commercially available products can be used therefor.

From the viewpoint of compatibility with the component (B), the component (D) preferably comprises at least one compound selected from the group consisting of the ether compound, the ester compound, the aromatic compound, the ketone compound, and the cyclic alkyl compound. Further preferably, it comprises at least one compound selected from the group consisting of the ester compound and the aromatic compound. Among them, butyl acetate, toluene, or xylene is preferred. Toluene or xylene is more preferred, and xylene is particularly preferred. The xylene may be a mixture comprising isomers.

These components (D) may be used alone or in combination of at least two of them. The amount to make the standard of the component (D) in a case of using two or more kinds is the total amount of the components (D). The styrene and methyl methacrylate listed here are contained in the component (D) although both of them have a radically polymerizable group.

The use amount of the component (D) is preferably 0.1 parts by mass or more and 10 parts by mass or less when the component (B) is set to 100 parts by mass. When the use amount of the component (D) falls within this range, compatibility with the component (B) can be enhanced, and smoothness of the obtained photochromic layer can be further improved. As a result, appearance defects can be prevented or reduced further, and, adhesion and durability of the photochromic resin layer can be improved. With respect to 100 parts by mass of the component (B), the component (D) is more preferably 0.5 parts by mass or more and 9 parts by mass or less, and particularly preferably 1.0 part by mass or more and 6 parts by mass or less.

<Component (E)>

The curable composition according to the embodiment may further contain a hindered amine component as the component (E) . The hindered amine functions as a light stabilizer. When a curable composition containing the component (E) is used, durability of the cured product is improved. Examples of the component (E) include the following component (E1) and component (E2). The component (E) may comprise either the component (E1) or the component(E2), but preferably the component (E) comprises both of them.

Component (E1)

The component (E1) is a reactive hindered amine compound having at least one reactive group selected from the group consisting of a radically polymerizable group and a group reactive with a radically polymerizable group. When such component (E1) is used, the appearance of the cured product tends to be further enhanced. The reason for this

will be described below. First, a hindered amine light stabilizer (HALS) may leak-out, the so-called "bleed out", from a cured product to its surface over time. The HALS is considered as having higher affinity with the acrylic adhesive contained in the aforementioned protective film. Therefore, it is considered that, use of the curable composition containing HALS improves the photostability, but this may make the acrylic adhesive easily permeate the aforementioned photochromic resin layer. Regarding this problem, the component (E1) has a radically reactive group. Therefore, similarly to the case of the component (A), the component (E1) is in a state of a composite formed with the component (B) in the cured product, and thus, bleed-out to the surface of the photochromic resin layer is reduced. Therefore, when the component (E1) is contained, permeation of the acrylic adhesive derived from the aforementioned protective film is hindered by the photochromic resin layer, and thus, the appearance defects of the cured product will be prevented or reduced.

Examples of the radically polymerizable group in the component (E1) include a (meth)acryloyl group (methacryloyl group, and/or acryloyl group) and a vinyl group. Examples of the group reactive with a radically polymerizable group include a thiol group, an amino group, and an epoxy group.

It is preferred that the component (E1) has a 2,2,6,6-pentamethyl-4-piperidyl structure. Specifically, it is preferably a compound represented by a formula (X) below (hereinafter, this may be referred to as component (E1X)).

[CF 16]

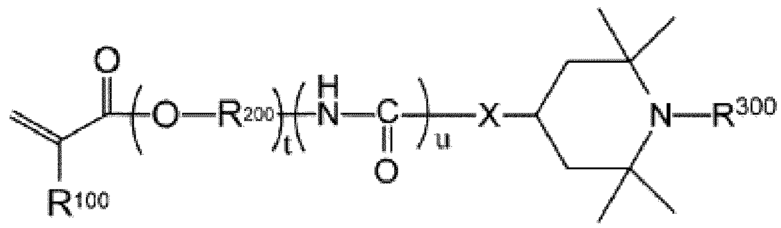

(X)

In the formula (X),

$R^{100}$ and $R^{300}$ are each a hydrogen atom or a methyl group,
X is a group represented by a formula (Z) below,
$R^{200}$ is an alkylene group having 1 to 5 carbon atoms,
t is a number from 0 to 20 on average, and
u is a number from 0 to 20 on average.

[CF 17]

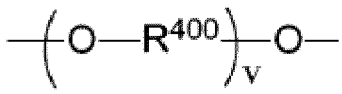

(Z)

In the formula (Z),
$R^{400}$ is an alkylene group having 1 to 20 carbon atoms, and v is a number from 0 to 20 on average.

In the above formula, t, u and v are shown as average values because they are often obtained as a mixture in the production process.

In the formula (X), $R^{300}$ is preferably a methyl group; $R^{100}$ is a hydrogen atom or a methyl group.

X is a divalent group represented by the formula (Z) . In the formula (Z), $R^{400}$ is an alkylene group having 1 to 20 carbon atoms, and the alkylene group may be linear or branched. Particularly preferably, $R^{400}$ is a linear or branched alkylene group having 1 to 10 carbon atoms, and more preferably, a linear or branched alkylene group having 1 to 3 carbon atoms. In order to exhibit excellent effects, v is preferably smaller, and is preferably a number from 0 to 10 on average, and more preferably, a number from 0 to 5 on average.

$R^{200}$ is an alkylene group having 1 to 10 carbon atoms, and the alkylene group may be linear or branched. In order to exhibit excellent effects, a linear or branched alkylene group having 1 to 5 carbon atoms is further preferred. In order to exhibit excellent effects, t is preferably smaller, and preferably, t is a number from 0 to 10 on average, and more preferably, a number from 0 to 5 on average.

In the above formula, u is a number from 0 to 20 on average. In order to exhibit excellent effects, u is preferably smaller, and preferably, u is a number from 0 to 3 on average, and more preferably a number from 0 to 2 on average.

The component (E1X) is a known compound, and any commercially available product can be used therefor.

Specific examples thereof include LA-82 and LA-87 manufactured by ADEKA CORPORATION.

As a component to exhibit excellent effects, among the examples of component (E1X), particularly preferred is a compound in which $R^{100}$ and $R^{300}$ are methyl groups, and t, u and v are 0 (X is an oxygen atom).

Specifically, a preferred example of component (E1X) is 1,2,2,6,6,-pentamethyl-4-piperidyl methacrylate. Among the examples of component (E1X), the 1,2,2,6,6,-pentamethyl-4-piperidylmethacrylate can keep the stability of the photochromic curable composition itself and the stability of the photochromic optical article at a high level even if the compounding amount is relatively small.

In a case where the curable composition according to the embodiment contains the component (E1), the amount of the component (E1) relative to 100 parts by mass of the component (B) is preferably 0.5 parts by mass or more and 5.0 parts by mass or less, and further preferably 0.5 parts by mass or more and 3.0 parts by mass or less.

Component (E2)

The component (E2) is a non-reactive hindered amine compound having no reactive group, which is selected from the group consisting of a radically polymerizable group and a group reactive with a radically polymerizable group. That is, the component (E2) is HALS that has been used in general. It is considered that the component (E2) has a higher photostable effect than the component (E1) in the photochromic resin layer that is a cured product of the curable composition. From the viewpoint of further enhancing the appearance of the cured product, it is preferable to compound the component (E1) in the curable composition together with the component (E2).

Although the component (E2) is not particularly limited, it is preferable to use a compound represented by a formula (Y) below (hereinafter, this may be simply referred to as "component (E2Y)").

[CF 18]

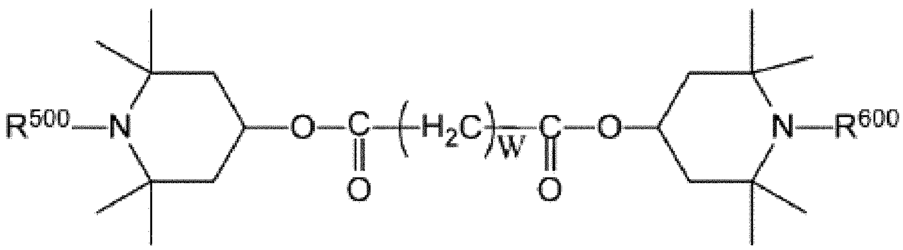

(Y)

In the formula (Y),
$R^{500}$ and $R^{600}$ are each a hydrogen atom or a methyl group, and W is an integer from 1 to 50.

As for the components (E2Y), bis(1,2,2,6,6-pentamethyl-4-piperidyl)sebacate is preferred. In this component, $R^{500}$ and $R^{600}$ are methyl groups and w is 8. In a case of using the component (E2Y), the component (E2) that can be used here contains bis(1,2,2,6,6-pentamethyl-4-piperidyl)sebacate as the component (E2Y) and (1,2,2,6,6-pentamethyl-4-piperidyl)sebacate that is inevitably contained. In this case, the compounding amount of the component (E2) may be based on the total amount of the bis(1,2,2,6,6-pentamethyl-4-piperidyl)sebacate and the (1,2,2,6,6-pentamethyl-4-piperidyl)sebacate. Needless to note, the (1,2,2,6,6-pentamethyl-4-piperidyl)sebacate corresponds to the component (E2) other than the component (E2Y) .

The component (E2) may consist of the component (E2Y), or it may comprise both the component (E2Y) and (1,2,2,6,6-pentamethyl-4-piperidyl)sebacate. Further, it may contain component (E2Y) and component (E2) that is not the component (E2Y) or the (1,2,2,6,6-pentamethyl-4-piperidyl)sebacate. Furthermore, the component (E2) may contain the component (E2Y) and the (1,2,2,6,6-pentamethyl-4-piperidyl)sebacate, and also a component (E2) other than these components . In order to exhibit further favorable effects, in the aspect, the component (E2) may contain the bis(1,2,2,6,6-pentamethyl-4-piperidyl)sebacate as the component (E2Y), and it may contain (1,2,2,6,6-pentamethyl-4-piperidyl)sebacate.

In a case where the curable composition according to the embodiment includes the component (E2), the amount of the component (E2) relative to 100 parts by mass of the component (B) is preferably 0.1 parts by mass or more and 5.0 parts by mass or less, and further preferably 0.1 parts by mass or more and 3.0 parts by mass or less.

Suitable ratio for compounding the component (E1) and the component (E2) in the component (E)

The component (E) preferably contains 0 parts by mass or more and 500 parts by mass or less of the component (E2) when the component (E1) is set to 100 parts by mass. When the content is within this range, favorable repetition durability can be maintained while the appearance defect derived from the scratch-proof protective film is prevented or

reduced sufficiently. Furthermore, in view of photochromic properties, storage stability, and other properties, it is preferred to contain both components (E1) and (E2). In a case where the curable composition according to the embodiment contains both components (E1) and (E2), it is preferable to contain 1 part by mass or more and 300 parts by mass or less of the component (E2), more preferably 1 part by mass or more and 200 parts by mass or less, still more preferably 1 part by mass or more and 150 parts by mass or less, and particularly preferably 1 part by mass or more and 100 parts by mass or less, relative to 100 parts by mass of the component (E1).

Suitable ratio for compounding component (E)

The amount of the component (E) relative to 100 parts by mass of the component (B) is preferably 0.1 parts by mass or more and 5.0 parts by mass or less. When the content is within this range, it is possible to impart favorable photochromic properties and repetition durability, and furthermore favorable storage stability. In order to improve the storage stability further, the content is more preferably 0.5 parts by mass or more and 4.0 parts by mass or less, still more preferably 1.0 part by mass or more and 3.5 parts by mass or less, and particularly preferably 1.0 part by mass or more and 2.8 parts by mass or less.

<Additives>

The photochromic curable composition according to the embodiment may contain various additives known per se within a range not impairing the effect. Examples of the additive include a polymerization initiator, an ultraviolet absorber, an infrared absorber, an ultraviolet stabilizer, an antioxidant, a coloring inhibitor, an antistatic agent, a fluorescent dye, a dye, a pigment, a perfume, a stabilizer, a solvent, and a leveling agent.

The use amount of the additive is, for instance, in the range from 0.001 to 10 parts by mass, particularly from 0.01 to 7.5 parts by mass, and further from 0.05 to 6 parts by mass, relative to 100 parts by mass of the component (B).

Polymerization initiator

The polymerization initiator comprises a thermal polymerization initiator and a photopolymerization initiator, and specific examples thereof are as follows.

Examples of the thermal polymerization initiator include:

diacyl peroxides such as benzoyl peroxide, p-chlorobenzoyl peroxide, decanoyl peroxide, lauroyl peroxide, and acetyl peroxide;
peroxy esters such as t-butyl peroxy-2-ethyl hexanate, t-butyl peroxy neodecanate, cumyl peroxy neodecanate, and t-butyl peroxy benzoate;
percarbonates such as diisopropyl peroxy dicarbonate, and di-sec-butyl peroxy dicarbonate; and
azo compounds such as azobisisobutyronitrile.

Examples of the photopolymerization initiator include:

acetophenone-based compounds such as 1-phenyl-2-hydroxy-2-methylpropan-1-one, 1-hydroxycyclohexylphenyl ketone, and 1-(4-isopropylphenyl)-2-hydroxy-2-methylpropan-1-one;
$\alpha$-dicarbonyl-based compounds such as 1,2-diphenylethanedione, and methylphenylglycoxylate; and
acylphosphine oxide-based compounds such as 2,6-dimethylbenzoyl diphenylphosphine oxide, 2,4,6-trimethylbenzoyl diphenylphosphine oxide, 2,4,6-trimethylbenzoyl diphenylphosphinic acid methyl ester, 2,6-dichlorbenzoyl diphenylphosphine oxide, and 2,6-dimethoxybenzoyl diphenylphosphine oxide.

In a case of using the photopolymerization initiator, any known polymerization-curing accelerator like tertiary amine can be used in combination.

Ultraviolet stabilizer

The ultraviolet stabilizer is suitably used because it can improve the durability of the photochromic compound. The ultraviolet stabilizer referred to herein does not contain the component (A). As such an ultraviolet stabilizer, a hindered phenol antioxidant, a sulfur-based antioxidant and the like are known. Examples of particularly suitable ultraviolet stabilizer include: 2,6-di-t-butyl-4-methyl-phenol, ethylene bis(oxyethylene) bis[3-(5-t-butyl-4-hydroxy-m-tolyl) propionate], IRGANOX 1010, 1035, 1075, 1098, 1135, 1141, 1222, 1330, 1425, 1520, 259, 3114, 3790, 5057, 565, 254, and 245 manufactured by Ciba Specialty Chemicals.

The use amount of the ultraviolet stabilizer is not particularly limited as long as the effects of the present invention are not impaired, but it is in the range of 0.001 to 10 parts by mass, particularly 0.01 to 3 parts by mass, relative to 100 parts by mass of the component (B).

Leveling agent

A leveling agent such as a non-reactive silicone oil may be compounded in the photochromic curable composition according to the embodiment within a range that does not inhibit the effects. There is no particular limitation on the non-reactive silicone oil, and examples of commercially available product that can be used therefor include: KF-351A, KF-352A, FL-5, X-22-821, X-22-822, KF-412 and KF-414 manufactured by Shin-Etsu Chemical Co., Ltd.; and L7001, FZ2104 and FZ2110 manufactured by Dow Toray Co., Ltd. Further, a reactive leveling agent having no siloxane bond may be compounded. There is no particular limitation on the reactive leveling agent, and commercially available products manufactured by ADEKA CORPORATION can be used. The examples include ADEKA REASOAP SR-10, SR-20, SR-1025, SR-3025, ER-10, ER-20, ER-30, ER-40, NE-10, and NE-20. As described above, use of these leveling agents may degrade the appearance of the photochromic cured product. As for the photochromic curable composition according to the embodiment, the component (A) functions as a leveling agent. Therefore, a photochromic resin layer excellent in smoothness can be obtained even when the use amount of the conventional leveling agent is reduced or such a leveling agent is not used. In a case where the curable composition according to the embodiment contains the non-reactive silicone oil, the amount thereof is preferably 1 part by mass or less, more preferably 0.5 parts by mass or less relative to 100 parts by mass of the component (B). It is further preferred that the curable composition according to the embodiment contains no non-reactive silicone oil, namely, the content is 0 parts by mass relative to 100 parts by mass of the component (B).

Catalyst

A catalyst may be further compounded in the photochromic curable composition according to the embodiment, within a range not inhibiting the effects, such that a radically polymerizable group reacts with a group reactive with the radically polymerizable group. There is no particular limitation on the catalyst, and the examples include: triphenylphosphine, methyldiphenylphosphine, dimethylphenylphosphine, tri-n-propylphosphine, hexylamine, dipropylamine, triethylamine, 1,8-bis(dimethylamino)naphthalene, diazabicycloundecene, and diazabicyclononene. It should be noted that use of these catalysts may degrade the durability of the photochromic cured product. In a case where the curable composition according to the embodiment contains the catalyst, the amount is not particularly limited, but preferably, 0.000001 parts by mass or more and 5 parts by mass or less relative to 100 parts by mass of the component (A). More preferably, it is 0.00001 parts by mass or more and 3 parts by mass or less, and particularly preferably, 0.00001 parts by mass or more and 2 parts by mass or less.

<Method for producing photochromic curable composition>

The photochromic curable composition according to the embodiment can be produced by mixing components (A), (B), (C), and, if necessary, other additive components (including components (D) and (E)). Though the procedure of mixing the respective components is not particularly limited, the component (B) and the component (C) are mixed in advance, and the component (E) is added thereto if necessary in a state where the component (C) is sufficiently dispersed in the component (B). Further, it is also possible to mix the component (A), and if necessary, the component (D) . In this case, the additive components may be compounded at any stage.

The SP value of the photochromic curable composition is not particularly limited. In consideration of the uniform dispersability of the respective components, the coatability of the photochromic curable composition and the applicability to the polyurethane resin layer laminated on the optical substrate, the SP value is preferably from 7.0 to 12.0, more preferably from 7.5 to 12.0, still more preferably from 7.5 to 11.5, and particularly preferably from 8.0 to 11.0. This SP value is calculated by titration in accordance with the turbidimetric titration described in detail below.

<Photochromic cured product>

A photochromic cured product is obtained by curing the photochromic curable composition.

Curing of the photochromic curable composition is carried out by radical polymerization reaction caused by irradiation with activation energy rays such as UV rays, $\alpha$ rays, $\beta$ rays, $\gamma$ rays, and LED rays, heat, or a combination thereof. In other words, an appropriate curing technique may be employed depending on the type of the polymerizable monomer or the polymerization curing accelerator in use and the type of the photochromic cured product to be formed. In a case of forming the photochromic laminate by a coating method described later, photopolymerization will be employed

preferably because a uniform film thickness can be obtained.

In photopolymerization of the photochromic curable composition, the curing conditions, particularly, UV intensity affects the properties and shapes of the obtained photochromic laminate. Although this illuminance condition cannot be limited generally since it is under influences of the type and amount of the photopolymerization initiator and the type of the polymerizable monomer, it is preferable to select a condition such that UV rays of 10 to 500 mW/cm$^2$ at a wavelength of 365 nm is irradiated for 0.1 to 5 minutes. Since the curable composition according to the embodiment contains the component (A), orientation of the leveling agent to the surface of the cured product can be prevented or reduced. Therefore, even if the UV ray intensity is not excessively increased, the curable composition can be sufficiently cured, and thus, the orientation of the leveling agent is prevented or reduced, whereby the productivity is improved.

<Photochromic laminate>

The photochromic laminate comprises an optical substrate, a photochromic resin layer as a cured product of the curable composition, and a polyurethane resin layer disposed between the optical substrate and the photochromic resin layer. The polyurethane resin layer may be omitted.

In a case of obtaining the photochromic laminate by a coating method, a photochromic curable composition is used as a coating solution. The coating solution is applied to the surface of an optical substrate such as a lens substrate by spin coating, dipping or the like. Subsequently, polymerization curing is performed by UV radiation or heating in an inert gas such as nitrogen. In this manner, a laminate having a photochromic layer of a photochromic cured product laminated on the surface of an optical substrate is obtained.

Examples of the optical substrate include those used for lenses for eyeglasses, windows in houses and automobiles, and the like. Specific examples of materials of the optical substrate include plastic materials such as (meth)acrylic resins, polycarbonate-based resins, allyl-based resins, thiourethane-based resins, urethane-based resins and thioepoxy-based resins, and glass.

In a case of forming a photochromic laminate on a surface of an optical substrate by a coating method as described above, it is preferable to enhance adhesion between the photochromic laminate and the optical substrate by treating the surface of the optical substrate chemically with an alkali solution, an acid solution or the like, or physically with a corona discharge, a plasma discharge, polishing or the like. It is also possible to provide a transparent adhesive resin layer on the surface of the optical substrate. This transparent adhesive resin layer is preferably a polyurethane resin layer. In other words, it is preferable to form a photochromic laminate comprising a laminated structure in which a polyurethane resin layer and a resin layer containing a photochromic compound are laminated in this order on the surface of the optical substrate.

It is preferable that the polyurethane resin layer is formed by applying a coating solution on the surface of the optical substrate and then removing a solvent of the coating solution. The coating solution contains a polyurethane resin and at least one component selected from the group consisting of precursors of moisture-curable urethane resins that can be cured by moisture in the air, and the solvent having a boiling point of 70°C or higher and a SP value of 8.0 or more.

Specifically, it is preferable to produce a photochromic laminate through the following steps. First, a step of forming a polyurethane resin layer is performed by applying on the surface of the optical substrate a coating solution containing a polyurethane resin and at least one component selected from the group consisting of precursors of moisture-curable urethane resins that can be cured by moisture in the air, and a solvent having a boiling point of 70°C or higher and a SP value of 8.0 or more, and then removing the solvent.

For the coating solution, a commercially available product can be used. It is particularly preferable to use a coating solution containing solid ingredients containing a polyurethane resin and at least one component selected from the group consisting of precursors of moisture-curable urethane resins that can be cured by moisture in the air, and also a solvent, where the content of the solid ingredients is 15 to 40% by mass and the solvent having a SP value of 8.0 or more is 60 to 85% by mass (this range is referred to a case where the total amount of the solid ingredients and the solvent is set to 100% by mass, and any other known component may be compounded in the coating solution).

For the solvent having SP value of 8.0 or more, solvents same as those exemplified as organic compounds having SP value of 8.0 or more in the component (D) can be used. Specific examples of solvent having a boiling point of 70°C or higher and SP value of 8.0 or more include: toluene (boiling point: 111°C, SP value: 8.8), xylene (boiling point: 138°C, SP value: 8.7), ethyl acetate (boiling point: 77°C, SP value: 9.0) , methyl propyl ketone (boiling point: 105°C, SP value: 8.7), butyl acetate (boiling point: 124°C, SP value: 8.5), methyl isopropyl ketone (boiling point: 95°C, SP value: 8.5), isopropyl acetate (boiling point: 89°C, SP value: 8.4), isobutyl acetate (boiling point: 116°C, SP value: 8.3), methyl isobutyl ketone (boiling point: 116°C, SP value: 8.5), ethylene glycol dimethyl ether (boiling point: 85°C, SP value: 8.6), propylene glycol monoethyl ether acetate (boiling point: 146°C, SP value: 8.6), methyl acetoacetate (boiling point: 170°C, SP value: 8.4), and diethyl ketone (boiling point: 101°C, SP value: 8.8). These solvents can be used alone, or a mixed solvent of two or more thereof can be used. In a case of using a mixture, the total amount of the mixed solvents is regarded as the standard. As for the SP value, a value of the mixed solvents is employed.

The polyurethane resin layer can be formed by coating a coating solution on an optical substrate and then removing the solvent. In a case where a precursor of moisture-curable urethane resin is contained, a polyurethane resin layer can be formed by curing this precursor by moisture in the air.

Though the thickness of the polyurethane resin layer is not particularly limited, it is preferably 2.0 to 10.0 μm.

Thereafter, the photochromic curable composition is applied on the polyurethane resin layer and the coating film is cured, so that a photochromic resin layer is formed. In this manner, a photochromic laminate in which the optical substrate and the photochromic resin layer are bonded via a polyurethane resin layer can be produced. Though the thickness of the photochromic resin layer is not particularly limited, it is 30 to 50 μm.

In application of the photochromic curable composition on the polyurethane resin layer, a trace amount of solvent having a boiling point of 70°C or more and a SP value of 8.0 or more may remain in the polyurethane resin layer. The trace amount of remaining solvent has a high compatibility with the component (D) contained in the curable composition. Therefore, a photochromic resin layer having further excellent smoothness is obtained in a case where the component (D) is compounded, and at the same time, the production efficiency tends to be improved.

The explanation above refers to a coating method. The photochromic cured product according to the embodiment can be produced also by any known methods such as casting polymerization, a bonding method, a dip-coating method, a flow-coating method, a spraying method, or a binder method.

The photochromic cured product and the laminate according to the embodiment may contain a dye such as a dispersing dye depending on the use. Further, a hard coat layer may be further laminated on the photochromic resin layer of the laminate. The hard coat layer is obtained, for instance, by applying a hard coat agent on the photochromic resin layer, and curing the film. Here, the hard coat agent is based on a sol of oxide of silicon, zirconium, antimony, aluminum, tin, tungsten or the like and contains a silane coupling agent. Alternatively, the hard coat layer can be formed by vapor-deposition of a metal oxide such as a $SiO_2$, $TiO_2$, or $ZrO_2$ onto the photochromic resin layer. Post-treatments such as an antireflection treatment and an antistatic treatment may be performed further on the photochromic resin layer of the laminate. These post-treatments are carried out, for instance, by applying a coating solution containing an organic polymer on the photochromic resin layer or the hard coat layer, and drying it to form a thin film.

The Vickers hardness of the photochromic cured product (a state in which a hard coat film or the like is not formed) is preferably 3.0 or more and 8.0 or less, more preferably 3.5 or more and 7.5 or less, and particularly preferably 4.0 or more and 7.5 or less.

A protective film may be attached to the surface of the photochromic resin layer of the photochromic laminate for the purpose of protecting the surface and preventing adhesion of dust. Since the photochromic cured product according to the embodiment may contain the component (A) as mentioned above, appearance defects due to the acrylic adhesive contained in the protective film may rarely occur. In order to further reduce the appearance defects, preferably there may be imparted a certain difference between the SP value of the photochromic curable composition and the SP value of the pressure-sensitive adhesive. The upper limit of this difference in the SP values is not particularly limited, but is preferably 5 or less from the viewpoint of adhesion. The difference in the SP values is preferably from 0.05 to 5.0, more preferably from 0.075 to 4.0, and particularly preferably from 0.1 to 3.0. The SP value of the photochromic curable composition and the SP value of the pressure-sensitive adhesive can be determined by titration by the turbidimetric titration as described in detail in Examples below.

In order to further reduce the appearance defects, preferably the photochromic cured product has a high contact angle with respect to the solvent contained in the adhesive surface of the protective film. An example of the solvent contained in the adhesive surface of the protective film is ethylene glycol. Specifically, it is preferable that the contact angle with respect to this solvent is 50° or more. By making the angle to 50° or more, the appearance defects can be reduced. Though the upper limit of the contact angle of the photochromic cured product with respect to the solvent is not particularly limited, it is preferably less than 90°. The contact angle is more preferably 50° or more and less than 90°, and even more preferably 50° or more and 85° or less.

Examples:

Hereinafter, the present invention will be described in detail by referring to Examples and Comparative Examples, but the present invention is not limited to these Examples. The notation, evaluation method and the like of each component are as follows.

<Components>

Component (A)

A1: (trade name: TEGORAD2100, manufactured by Evonik Japan Co. , Ltd.)
A2: (trade name:TEGORAD2300, manufactured by Evonik Japan Co. , Ltd.)
A3: (trade name: BYK-UV3500, manufactured by BYK Japan KK)
A4: (trade name: BYK-UV3505, manufactured by BYK Japan KK)
A5: (trade name: BYK-UV3510, manufactured by BYK Japan KK)
A6: (trade name: BYK-UV3530, manufactured by BYK Japan KK)
A7: (trade name: BYK-UV3535, manufactured by BYK Japan KK)
A8: (trade name: BYK-UV3570, manufactured by BYK Japan KK)
A9: (trade name: BYK-UV3575, manufactured by BYK Japan KK)
A10: (trade name: BYK-UV3576, manufactured by BYK Japan KK)
A11: (trade name: BYK-3550, manufactured by BYK Japan KK)
A12: (trade name: BYK-3560, manufactured by BYK Japan KK)
A13: (trade name: BYK-3565, manufactured by BYK Japan KK)
A14: (trade name: BYK-3566, manufactured by BYK Japan KK)
A15: (trade name: KR-511, manufactured by Shin-Etsu Chemical Co., Ltd.)
A16: (trade name: KR-513, manufactured by Shin-Etsu Chemical Co., Ltd.)
A17: (trade name: X-40-9296, manufactured by Shin-Etsu Chemical Co., Ltd.)
A18: (trade name: KF-8012, manufactured by Shin-Etsu Chemical Co., Ltd.)
A19: (trade name: DOWSIL BY16-205, manufactured by Dow-Toray Co., Ltd.)
A20: (trade name: KR-518, manufactured by Shin-Etsu Chemical Industry Co., Ltd.)
A21: (trade name: KR-516, manufactured by Shin-Etsu Chemical Industry Co., Ltd.)
A22: (trade name: DOWSIL BY16-876, manufactured by Dow-Toray Co., Ltd.)

Component (B)

Component (B1)

RX-1: polyrotaxane having acryloyl group and having properties below

Weight average molecular weight Mw (GPC): 180,000
Acryloyl group modification rate in side chain: 80 mol%
Percentage of OH groups remaining in side chain: 20 mol%
Axial molecule: linear polyethylene glycol (PEG) having molecular weight of 11,000
Clathrate ring: α-cyclodextrin (α-CD), introduction rate of 0.25
Terminal of axial molecule: sealed with adamantane
Side chain introduced into clathrate ring: molecular weight of side chain (on average) of approximately 500
Number of acryloyl groups per molecule: approximately 90

RX-1 was synthesized by the method described in WO2018/030275. The weight average molecular weight Mw of the RX-1 was determined by gel permeation chromatography (GPC) . As for the instrument, a liquid chromatographic apparatus (manufactured by Nihon Waters KK) was used. Here, two columns of TSKgel SuperHM-M (exclusion limit molecular weight: 4,000,000, manufactured by TOSOH CORPORATION) were used in series. Tetrahydrofuran was used for the developing solvent, and measurement was carried out under conditions with the flow rate of 0.6 ml/min at a temperature of 40°C. Polystyrene was used as a standard sample, and the weight average molecular weight was determined by a comparative conversion.

Component (B2)

SO-1: silsesquioxane having properties below and having methacryloyl groups

Number of methacrylate groups per molecule: 20
Weight average molecular weight: 4800
Acid value: 1.1 mgKOH/g

SO-2: (trade name: AC-SQ SI-20, manufactured by TOAGOSEI CO., LTD.)

Number of acryloyl groups per molecule: approximately 4
Weight average molecular weight: 2000

SO-1 was synthesized by the following method. First, 248 ml of ethanol and 54 g (3.0 mol) of water were added to 248 g (1.0 mol) of 3-trimethoxy silylpropyl methacrylate, to which 0.20 g (0.005 mol) of sodium hydroxide as a catalyst was added, and the raw materials were reacted at 30°C for 3 hours. After confirming consumption of the raw materials by $^{1}$H-NMR, the reacted materials were neutralized with dilute hydrochloric acid, to which 174 ml of toluene, 174 ml of heptane and 174 g of water were added so as to remove the aqueous layer. Thereafter, the organic layer was washed with water until the aqueous layer was neutralized, and the solvent was concentrated to obtain SO-1. It was confirmed by $^{29}$Si-NMR that SO-1 is a mixture of a cage-like structure, a ladder-like structure and a random structure.

The acid value contained in SO-1 was calculated in the following manner. First, 0.1 mol/L of potassium hydroxide alcoholic (ethanolic) solution (hereinafter, a measurement solution) was set in a 2ml microburette to prepare a stirrer. Using a graduated cylinder, ethanol and toluene were precisely weighed by 50 ml each, placed in a 200ml beaker, stirred and mixed by the stirrer. Three drops of phenolphthalein solution were added thereto, and empty titration was performed with the titrant. After the empty titration, 20 g of the sample was placed in the solution, stirred and mixed with a stirrer. Further, three drops of phenolphthalein solution were added, and the sample was titrated with a volumetric solution to obtain a titer. The method for calculating the acid value was based on the following equation.

Acid value (mgKOH/g) = titer (ml) × volumetric solution f × 5.6 / sample amount (g)

Here, f indicates the factor of the volumetric solution determined by using a standard hydrochloric acid solution. The f of N/10 potassium hydroxide alcoholic solution used in this method was 0.094. The sample amount indicates the weight of silsesquioxane contained in the sample.

The weight average molecular weight Mw of SO-1 was determined by a gel permeation chromatography (GPC). For the instrument, a liquid chromatographic apparatus (manufactured by Nihon Waters KK) was used. Here, three columns of Shodex GPC KF-802 (exclusion limit molecular weight: 5000, manufactured by SHOWA DENKO KK), Shodex GPC GPC KF802.5 (exclusion limit molecular weight: 20000, manufactured by SHOWA DENKO KK) and Shodex GPC KF-803 (exclusion limit molecular weight: 70000, manufactured by SHOWA DENKO KK) were used in series.

Tetrahydrofuran was used as the developing solution and measurement was carried under the conditions with the flow rate of 1 ml/min and at a temperature of 40°C. Polystyrene was used as the standard sample, and the weight average molecular weight was determined by comparative conversion.

Component (B3)

Component (B31)

Component (B31a)

9G: polyethylene glycol dimethacrylate (average chain length of ethylene glycol chain: 9, average molecular weight: 536)
14G: polyethylene glycol dimethacrylate (average chain length of ethylene glycol chain: 14, average molecular weight: 736)
A-400: polyethylene glycol diacrylate (average chain length of ethylene glycol chain: 9, average molecular weight: 508)

Component (B31b)

BPE800: 2,2-bis[4-(methacryloyloxypolyethoxy) phenyl]propane (c + d = 10, average molecular weight: 804) Components (B31c)
APC56: polycarbonate diol obtained by phosgenation of pentamethylene glycol with hexamethylene glycol (average molecular weight: 1000)

Component (B32)

Component (B32a)

TMPT: trimethylolpropane trimethacrylate
D-TMP: ditrimethylolpropane tetraacrylate

Component (B33)

TSL-1: γ-methacryloyl oxypropyl trimethoxysilane
GMA: glycidyl methacrylate

Component (C)

PC1: compound represented by a formula below

[CF 19]

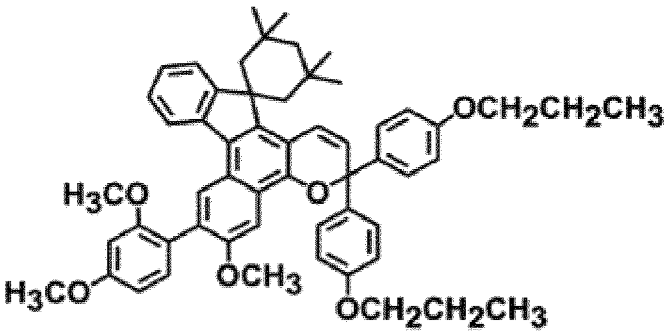

PC2: a compound represented by a formula below, which is synthesized by referring to the process described in WO2019/013249

PC3: a compound represented by a formula below, in which photochromic compounds are bonded to the both terminals of a polypropylene glycol chain that is synthesized by the method described in WO2012/149599 and that has a molecular weight of 2000

[CF 21]

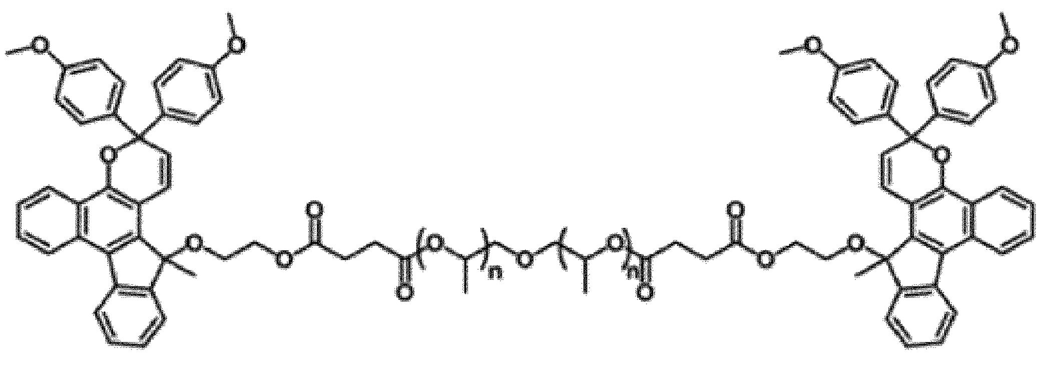

PC4: a compound represented by a formula below

[CF 22]

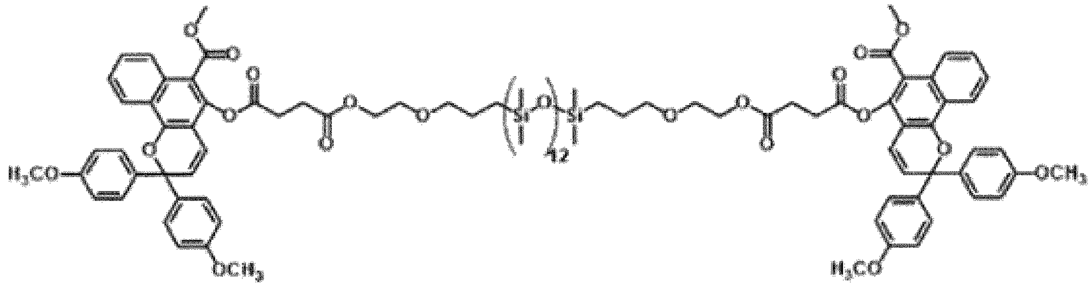

PC5: a compound represented by a formula below

[CF 23]

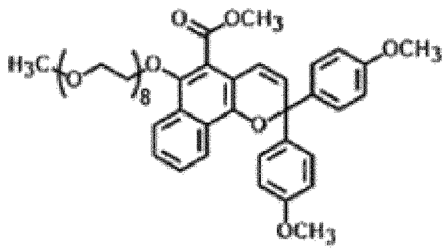

PC6: a compound represented by a formula below

[CF 24]

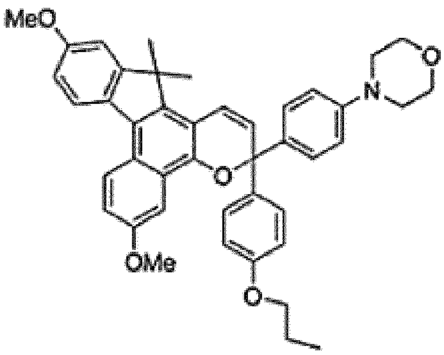

Component (D)

OC-1: xylene (boiling point: 138°C, SP value: 8.7)
OC-2: toluene (boiling point: 111°C, SP value: 8.8)
OC-3: ethyl acetate (boiling point: 80°C, SP value: 9.1)
OC-4: propylene glycol monoethyl ether (boiling point: 120°C, SP value: 9.1)

Component (E)

Component (E1)

HALS-2: 1,2,2,6,6,-pentamethyl-4-piperidyl methacrylate (molecular weight: 239), which is a compound having $R^{100}$ and $R^{300}$ as methyl groups and t, u, and v as zero in formula (X)

HALS-3: a hindered amine (molecular weight: 370) represented by a formula below (HALS-3)

[CF 25]

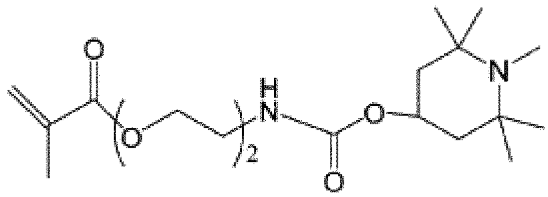

(HALS-3)

HALS-3 was prepared in the following manner.

A stir blade, a thermometer and a dropping funnel were installed in a 200mL four-neck flask. This flask was charged with 17.0 g (0.1 mol) of 1,2,2,6,6-pentamethyl-4-hydroxypiperidine, 7.4 mg of dibutyltin dilaurate, 6.1 g (0.05 mol) of dibutylhydroxyl toluene, and 60 mL of dehydrated toluene. The mixture was heated to 60°C, and 19.9 g (0.1 mol) of 2-(2-methacryloyloxyethyloxy)ethyl isocyanate was added thereto portionwise, and stirred at temperature in a range of 60 to 65°C for one hour. Thereafter, it was washed three times with 50 mL of water and extracted with toluene. After drying with magnesium sulfate, the solvent was distilled off. The resulting white solid was purified on a neutral alumina column {developing solvent: chloroform / ethyl acetate = 3/1(v/v) } to obtain 36.3 g of white solid.

The elemental analysis values of this product were as follows. C: 65.09%, H: 9.75%, N: 7.70%, and O: 17.47%. These values agree quite well with the calculated value for $C_{20}H_{35}N_2O_4$, namely, C: 65.19%, H: 9.85%, N: 7.60%, and O: 17.37%.

In a measurement of the nuclear magnetic resonance spectrum of protons, a peak for 32 protons was observed at 1 to 5 ppm, and a peak of 2 protons based on a methacryloyl group and a peak of 1 proton based on a hydrogen atom at 4-position of a piperidyl group were observed at 5 to 7 ppm.

Therefore, it was confirmed that this was a compound represented by the formula (HALS-3). The yield was 92%.

Component (E2)

HALS-1: bis(1,2,2,6,6-pentamethyl-4-piperidyl) sebacate (molecular weight: 508), a compound having $R^{500}$ and $R^{600}$ being methyl groups and W being 8 in the formula (Y)

Other additives

Polymerization initiator

CGI1: phenylbis(2,4,6-trimethylbenzoyl)-phosphineoxide (trade name: Omnirad819 manufactured by IGM Resins B.V.)

CGI2: 1-hydroxycyclohexylphenyl ketone (trade name: Omnirad184 manufactured by IGM Resins B.V.)

Stabilizer

HP: ethylene bis(oxyethylene)bis[3-(5-tert-butyl-4-hydroxy -m-tolyl) propionate] (Irganox245 manufactured by Ciba Specialty Chemicals)

Leveling agent

L7001: (trade name: L7001, manufactured by Dow Corning Toray)
ER-10: (trade name: ER-10, manufactured by ADEKA CORPORATION)
NE-10: (trade name: NE-10, manufactured by ADEKA CORPORATION)

Catalyst

CA-1: dimethylphenylphosphine

<Example 1>

(Production of photochromic curable composition)

First, components described below were prepared.

| | | |
|---|---|---|
| Component (A): | A1 | 0.1 parts by mass |
| Component (B1): | RX-1 | 3 parts by mass |
| Component (B2): | SO-1 | 0.1 parts by mass |
| Component (B31a): | 9G | 40 parts by mass |
| Component (B31a): | A-400 | 25 parts by mass |
| Component (B32a): | TMPT | 25 parts by mass |
| Component (B33): | TSL-1 | 5.9 parts by mass |
| | GMA | 1 part by mass |
| Component (C): | PC1 | 2 parts by mass |
| Components (E): | | |
| Component (E1): | HALS-2 | 1.5 parts by mass |
| Component (E2): | HALS-1 | 1 part by mass |
| (Polymerization Initiator): | CGI-1 | 0.3 parts by mass |
| | CGI-2 | 0.3 parts by mass |
| (Stabilizer): | HP | 1 part by mass |

Next, all of the compounds corresponding to the component (B) were mixed, in which the component (C), the component (E), and other additives were mixed to obtain a mixture. The component (A) was further mixed in this mixture to obtain a photochromic curable composition.

(Production of photochromic laminate)

A photochromic curable composition obtained by the above method was used to produce a photochromic laminate by a coating method. Specifically, a thiourethane-based plastic lens having a 2mm central thickness and a refractive index of 1.60 was prepared as an optical substrate. The thiourethane-based plastic lens used here was in advance subjected to alkali-etching at 50°C for 5 minutes with an aqueous solution of 5% sodium hydroxide and then, washed sufficiently with distilled water.

Next, using a spin coater (1H-DX2 manufactured by MIKASA CO., LTD.), a coating solution was coated on the surface of the plastic lens at a rotational speed of 70 rpm for 15 seconds, and further at 1000 rpm for 10 seconds, whereby a polyurethane resin layer of 6 um was obtained. For the coating solution, a moisture-curable primer liquid containing a precursor of a moisture-curable urethane resin and a solvent was used. The solvents contained toluene (boiling point: 111°C, SP value: 8.8) and ethyl acetate (boiling point: 77°C, SP value: 9.0), and the amount of ethyl acetate relative to 100 parts by mass of toluene was 185 parts by mass.

Next, on this polyurethane resin layer, about 2 g of the photochromic curable composition obtained in the aforementioned manner was applied by spin coating to obtain a coating film having a film thickness of 40 um. In the spin coating, the lens was first rotated at 100 rpm for 30 seconds to form a coating film. Subsequently, the number of revolutions was increased to 900 rpm, and the lens was further rotated for 5 to 15 seconds to remove the excess photochromic curable composition.

The lens provided with the coating film of the photochromic curable composition was then irradiated with light for 90 seconds using a metal halide lamp at an output of 200 mW/cm$^2$ in a nitrogen gas atmosphere so as to cure the coating film. Thereafter, the lens was further heated at 90°C for 1 hour to produce a photochromic laminate having a photochromic resin layer. The same process was repeated to produce 20 photochromic laminates.

<Examples 2 to 18, Comparative Examples 1 and 2>

Photochromic curable compositions and photochromic laminates were prepared in the same manner as in Example 1, except that the compounding of the respective components and the output of the metal halide lamp were modified as described in Table 1 or Table 2.

<Examples 19 to 55>

Photochromic curable compositions and photochromic laminates were prepared in the same manner as in Example 1, except that the compounding of the respective components and the output of the metal halide lamp were modified as described in Table 4, Table 5, or Table 6. In certain Examples, the catalysts were added immediately before production of the photochromic laminate.

<Evaluation method>

(Photochromic properties)

Photochromic laminates obtained in Examples and Comparative Examples were used as samples. These samples were irradiated for 300 seconds by use of a xenon lamp L-2480(300W)SHL-100 manufactured by HAMAMATSU PHOTONICS K.K. via an aeromass filter (manufactured by Corning Incorporated) such that the beam intensity on the surface of the photochromic optical article would be 365 nm = 2.4 mW/cm$^2$, 245 nm = 24 $\mu$W/cm$^2$ at 23$\pm$1°C so as to develop color, and the maximal absorption wavelength, color development density and fading rate described below were measured. This measurement was performed on 20 photochromic laminates, and the averages were calculated. The averages are shown in Table 3, Table 7 or Table 8.

•Maximal absorption wavelength ($\lambda$max)

It is the maximal absorption wavelength after color development determined by a spectrophotometer (instantaneous multichannel photodetector MCPD3000) manufactured by OTSUKA ELECTRONICS CO., LTD. The maximal absorption wavelength relates to the color tone at the time of color development.

•Color optical density {$\varepsilon$(300)-$\varepsilon$(0)}

It is the difference between the absorbance {$\varepsilon$(300)} and the absorbance $\varepsilon$ (0) at the maximal absorption wavelength, where {$\varepsilon$(300)} is taken 300 seconds after light irradiation and $\varepsilon$ (0) is taken before the light irradiation. When the value is higher, the photochromic properties are regarded as further favorable.

•Fading rate [t1/2(sec.)]

It is the time period required for the absorbance at the maximal absorption wavelength of a sample to decrease to 1/2 of {$\varepsilon$(300)-$\varepsilon$(0)} when irradiation with light is stopped after 300 seconds of light irradiation. When the time is shorter, the photochromic properties are regarded as further favorable.

(Repetition durability)

The following degradation acceleration test was carried out to evaluate the repetition durability in the color development of photochromic compounds caused by light irradiation. First, degradation of the obtained photochromic laminate was accelerated for 200 hours by a xenon weather meter {X25 manufactured by Suga Test Instruments Co., Ltd.}. The color optical density was evaluated before and after the degradation, and the color optical density ($A_0$) before the test and the color optical density ($A_{200}$) after the test were measured.

From this measurement result, a residual rate as an index for the repetition durability was calculated. The results are shown in Table 3, Table 6, or Table 7.

$$\text{Residual rate (\%)} = \{(A_{200}/A_0) \times 100\}$$

In the equation, $A_0$ is the color optical density before the test and $A_{200}$ is the color optical density after the test.

Further, a degree of yellowing (ΔYI) was determined using a colorimeter {SM-4 manufactured by Suga Test Instruments Co. , Ltd.}.

$$\Delta YI = YI_{200} - YI_0$$

In the equation, $YI_{200}$ is YI after the accelerated degradation for 200 hours, and $YI_0$ is YI before the accelerated degradation.

The higher the residual rate and the smaller the degree of yellowing, the repetition durability and the photochromic properties are further favorable.

(Appearance evaluation)

First, a protective film was adhered on the photochromic resin layer of the photochromic laminate obtained in any of Examples and Comparative Examples. The thickness of the adhesive layer in the protective film was 0.1 mm, and an acrylic adhesive was used therefor. Next, the photochromic laminate with this protective film attached was heated at a temperature of 70°C over 1 hour.

After peeling off the protective film from the heated photochromic laminate, the exposed photochromic resin layer was observed with an optical microscope and an illumination device (QC X75, manufactured by Bulbtronics Inc.) to evaluate the appearance. Next, a protective film was again attached on the photochromic resin layer, and the photochromic resin layer with the protective film attached thereon was further heated at a temperature of 70°C for 1 hour. After peeling off the protective film from the photochromic laminate heated for totally 2 hours, the exposed photochromic resin layer was observed again using the optical microscope and the illumination device in order to evaluate the appearance. This appearance evaluation was performed on all of the twenty photochromic laminates.

If the appearance is favorable after heating for 2 hours, it means that a photochromic laminate having excellent appearance can be obtained even after peeling off the protective film that has been applied for a long period of time.

The appearance was evaluated in terms of four points: smoothness (appearance), cracks, white turbidity, and wrinkle defects. The evaluation criteria are as follows. The results are shown in Table 3, Table 7, or Table 8.

Smoothness

A: As for all of the twenty photochromic laminates, the surfaces are uniform and no irregularities are found.
B: At least one of the twenty photochromic laminates has fine irregularities on the surface, while the remaining photochromic laminates are rated as 'A'.
C: At least one of the twenty photochromic laminates has a few irregularities on the surface, while the remaining photochromic laminates are rated as 'A' or 'B'.
D: At least one of the twenty photochromic laminates has irregularities at a part on the surface, while the remaining photochromic laminates are rated as any of 'A', 'B' or 'C'.
E: At least one of the twenty photochromic laminates has irregularities on the entire surface.

Cracks

A: As for all of the twenty photochromic laminates, the surfaces are uniform and no cracks are found.
B: At least one of the twenty photochromic laminates has very few fine cracks on the surface, while the remaining photochromic laminates are rated as 'A'.
C: At least one of the twenty photochromic laminates has a few cracks on the surface, while the remaining photochromic laminates are rated as 'A' or 'B'.
D: At least one of the twenty photochromic laminates has cracks at a part on the surface, while the remaining photochromic laminates are rated as any of 'A', 'B' or 'C'.
E: At least one of the twenty photochromic laminates has cracks on the entire surface.

White turbidity

A: As for all of the twenty photochromic laminates, the surfaces are uniform and white turbidity is not found at all.
B: At least one of the twenty photochromic laminates has a very little white turbidity, while the remaining photochromic laminates are rated as 'A'.
C: At least one of the twenty photochromic laminates has a little white turbidity, while the remaining photochromic laminates are rated as 'A' or 'B'.
D: At least one of the twenty photochromic laminates has white turbidity partially, while the remaining photochromic laminates are rated as any of 'A', 'B' or 'C'.
E: At least one of the twenty photochromic laminates has white turbidity entirely.

Wrinkle Defects

A: As for all of the twenty photochromic laminates, wrinkle defects, namely, fine streaks or stripes are not found at all in the photochromic resin layer.
B: At least one of the twenty photochromic laminates has few fine wrinkle defects in the photochromic resin layer, while the remaining photochromic laminates are rated as 'A'.
C: At least one of the twenty photochromic laminates has a few wrinkle defects, while the remaining photochromic laminates are rated as 'A' or 'B'.
D: At least one of the twenty photochromic laminates has wrinkle defects partially in the photochromic resin layer, while the remaining photochromic laminates are rated as any of 'A', 'B' or 'C'.
E: At least one of the twenty photochromic laminates has wrinkle defects entirely in the photochromic resin layer.

(Yield)

The number of photochromic optical articles free from any appearance defects was counted, and the number was divided by 20, the total number of the photochromic optical articles, to determine the yield. The results are shown in Table 3, Table 6, or Table 7.

(Adhesion)

The adhesion of the photochromic laminate was evaluated by a cross-cut tape test according to JISD-0202. Specifically, 100 squares were formed by cutting the surface of the obtained photochromic laminate with a knife at intervals of 1 mm. A cellophane pressure-sensitive adhesive tape (Cellotape (registered trademark) manufactured by NICHIBAN Co., Ltd.) was firmly stuck thereon. After quickly pulling the tape for peeling off at an angle of 90° to the surface, the number of squares remaining on the photochromic optical article was calculated. This test was performed on the twenty photochromic laminates, and the average thereof was employed as the number of remaining squares. The number of the remaining squares is shown as an adhesion index in Table 3, Table 7, or Table 8.

(Vickers hardness)

The Vickers hardness of the photochromic laminate was measured by using a microvickers hardness meter PMT-X7A (manufactured by MATSUZAWA CO., LTD.). The measurement was conducted using a square pyramid type diamond indenter under conditions with 10 gf load and indenter holding time of 30 seconds. The measurement was performed four times in total and the measurement results were indicated as the averages of the second to the fourth measurements, while the values in the first measurement were excluded due to a large measurement error. This test was performed on the twenty photochromic laminates, and the averages were taken as Vickers hardness. The results are shown in Table 3, Table 7, or Table 8.

(Contact angle)

First, ethylene glycol (2.0 ul) was dropped onto the photochromic resin layer of the photochromic laminate to form liquid droplet. After 5 seconds of the dropping, the contact angle of the thus formed liquid droplet was measured 5 times by using an automatic contact angle meter DM500 (manufactured by Kyowa Interface Science Co., Ltd.) so as

to obtain the average. This test was performed on the twenty photochromic laminates, and the average was employed as the contact angle. The results are shown in Table 3, Table 7, or Table 8.

(SP value difference)

The difference between SP value of the photochromic curable composition and SP value of the adhesive of the protective film was calculated in accordance with the following method.

First, the SP values of the photochromic curable compositions obtained in Examples and Comparative Examples were calculated by turbidimetric titration. More specifically, 2.0 g of the photochromic curable composition was dissolved in 10 ml of acetone. The thus obtained solution of photochromic curable composition was titrated with deionized water and n-hexane, and a titer at which this solution became turbid was determined. The SP value was calculated from the obtained values, using the following equations.

$$\text{SP value} = ((VH)^{1/2} \times \delta H + (VL)^{1/2} \times \delta L) / ((VH)^{1/2} + (VL)^{1/2})$$

$$VH = H/(S+H)$$

$$VL = L/(S+L)$$

$$\delta H = A \times S/(S+H) + B \times H(S+H)$$

$$\delta L = A \times S/(S+L) + C \times H(S+L)$$

H: n-hexane titer (ml)
L: deionized water titer (ml)
VH: volume fraction of hexane
VD: volume fraction of deionized water
S: acetone use amount (ml)
A: SP value for acetone
B: SP value of n-hexanes
C: SP value of deionized water

Next, the SP value of the adhesive of the protective film was calculated in the same manner as described above. Then, a difference was obtained by subtracting the SP value of the protective film adhesive from the SP value of the photochromic curable composition. The absolute value of this difference is shown in Table 3, Table 7, or Table 8 as the SP value difference.

(Turbidity)

In order to evaluate the turbidity of the surface of the photochromic composition after a long term storage, the following storage acceleration test was performed. That is, the obtained photochromic laminate was placed for 24 hours in a constant temperature and humidity chamber at 60°C and 98%RH. The difference (ΔHAZE) between HAZE before the test and HAZE after the test was determined using a haze meter. The results are described in Table 3, Table 7, or Table 8.

$$\Delta HAZE = HAZE_{24} - HAZE_0$$

In the equation, $HAZE_{24}$ represents HAZE after 24 hours, and $HAZE_0$ represents HAZE before placement in the constant temperature and humidity chamber.
(Note: "Ex." and "Com.Ex." in Tables 1 to 8 below indicate "Example" and "Comparative Example", respectively.)

[Table 1-1]

| No. | Component (A) (part by mass) | Component (B) | | | Component (C) (part by mass) | Component (D) (part by mass) | Component (E) (part by mass) | Other additive (part by mass) | Photochromic curable composition SP value | Output at curing (mW) |
|---|---|---|---|---|---|---|---|---|---|---|
| | | Component (B1) (part by mass) | Component (B2) (part by mass) | Component (B3) (part by mass) | | | | | | |
| Ex. 1 | A1 (0.1) | RX-1 (3) | SO-1 (0.1) | 9G (40)<br>A-400 (25)<br>TMPT (25)<br>TSL-1 (5.8)<br>GMA (1) | PC1 (2) | - | HALS-1(1)<br>HALS-2 (1.5) | CGI-1 (0.3)<br>CGI-2 (0.3)<br>HP (1) | 9.9 | 200 |
| Ex. 2 | A1 (0.1) | RX-1 (3) | SO-1 (0.1) | 9G (40)<br>A-400 (25)<br>TMPT (25)<br>TSL-1 (5.8)<br>GMA (1) | PC1 (2) | - | HALS-1(1)<br>HALS-3 (1.5) | CGI-1 (0.3)<br>CGI-2 (0.3)<br>HP (1) | 9.9 | 200 |
| Ex. 3 | A1 (0.1) | RX-1 (3) | SO-1 (0.1) | 9G (40)<br>A-400 (25)<br>TMPT (25)<br>TSL-1 (5.8)<br>GMA (1) | PC1 (2) | - | HALS-1 (2.5) | CGI-1 (0.3)<br>CGI-2 (0.3)<br>HP (1) | 9.9 | 200 |
| Ex. 4 | A1 (0.1) | RX-1 (3) | SO-1 (0.1) | 9G (40)<br>A-400 (25)<br>TMPT (25)<br>TSL-1 (5.8)<br>GMA (1) | PC1 (2) | - | HALS-2 (2.5) | CGI-1 (0.3)<br>CGI-2 (0.3)<br>HP (1) | 9.9 | 200 |
| Ex. 5 | A1 (0.1) | RX-1 (3) | SO-1 (0.1) | 9G (40)<br>A-400 (25)<br>TMPT (25)<br>TSL-1 (5.8)<br>GMA (1) | PC1 (2) | - | HALS-2 (2.5) | CGI-1 (0.3)<br>CGI-2 (0.3)<br>HP (1) | 9.9 | 120 |

[Table 1-2]

| No. | Component (A) (part by mass) | Component (B) | | | Component (C) (part by mass) | Component (D) (part by mass) | Component (E) (part by mass) | Other additive (part by mass) | Photochromic curable composition SP value | Output at curing (mW) |
|---|---|---|---|---|---|---|---|---|---|---|
| | | Component (B1) (part by mass) | Component (B2) (part by mass) | Component (B3) (part by mass) | | | | | | |
| Ex. 6 | A1 (0.1) | RX-1 (3) | SO-1 (0.1) | 9G (40)<br>A-400 (25)<br>TMPT (25)<br>TSL-1 (5.8)<br>GMA (1) | PC1 (2) | - | HALS-1 (1)<br>HALS-2 (1.5) | CGI-1 (0.3)<br>HP (1) | 9.9 | 200 |
| Ex. 7 | A1 (0.1) | RX-1 (3) | SO-1 (0.1) | 9G (40)<br>A-400 (25)<br>TMPT (25)<br>TSL-1 (5.8)<br>GMA (1) | PC2 (2) | - | HALS-1 (1)<br>HALS-2 (1.5) | CGI-1 (0.3)<br>CGI-2 (0.3)<br>HP (1) | 9.9 | 200 |
| Ex. 8 | A1 (0.1) | RX-1 (3) | SO-1 (0.1) | 9G (40)<br>A-400 (25)<br>TMPT (25)<br>TSL-1 (5.8)<br>GMA (1) | PC3 (2) | - | HALS-1 (1)<br>HALS-2 (1.5) | CGI-1 (0.3)<br>CGI-2 (0.3)<br>HP (1) | 9.9 | 200 |
| Ex. 9 | A2 (0.05) | RX-1 (3) | SO-1 (0.1) | 9G (40)<br>A-400 (25.05)<br>TMPT (25)<br>TSL-1 (5.8)<br>GMA (1) | PC3 (2) | - | HALS-1 (1)<br>HALS-2 (1.5) | CGI-1(0.3)<br>CGI-2 (0.3)<br>HP (1) | 9.9 | 200 |
| Ex. 10 | A1 (0.01) | RX-1 (3) | SO-1 (0.1) | 9G (40)<br>A-400 (25.09)<br>TMPT (25)<br>TSL-1 (5.8)<br>GMA (1) | PC3 (2) | - | HALS-1 (1)<br>HALS-2 (1.5) | CGI-1 (0.3)<br>CGI-2 (0.3)<br>HP (1) | 9.9 | 200 |

[Table 1-3]

| No. | Component (A) (part by mass) | Component (B) | | | Component (C) (part by mass) | Component (D) (part by mass) | Component (E) (part by mass) | Other additive (part by mass) | Photochromic curable composition SP value | Output at curing (mW) |
|---|---|---|---|---|---|---|---|---|---|---|
| | | Component (B1) (part by mass) | Component (B2) (part by mass) | Component (B3) (part by mass) | | | | | | |
| Ex. 11 | A1 (0.05) | RX-1 (3) | SO-1 (0.1) | 9G (40)<br>A-400 (25.05)<br>TMPT (25)<br>TSL-1 (5.8)<br>GMA (1) | PC3 (2) | - | HALS-1 (1)<br>HALS-2 (1.5) | CGI-1(0.3)<br>CGI-2(0.3)<br>HP (1) | 9.9 | 200 |
| Ex. 12 | A1 (0.5) | RX-1 (3) | SO-1 (0.1) | 9G (40)<br>A-400 (24.6)<br>TMPT (25)<br>TSL-1 (5.8)<br>GMA (1) | PC3 (2) | - | HALS-1 (1)<br>HALS-2 (1.5) | CGI-1(0.3)<br>CGI-2(0.3)<br>HP (1) | 9.8 | 200 |
| Ex. 13 | A1 (3) | RX-1 (3) | SO-1 (0.1) | 9G (40)<br>A-400 (22)<br>TMPT (25)<br>TSL-1 (5.8)<br>GMA (1) | PC3 (2) | - | HALS-1 (1)<br>HALS-2 (1.5) | CGI-1 (0.3)<br>CGI-2 (0.3)<br>HP (1) | 9.7 | 200 |

[Table 2-1]

| No. | Component (A) (part by mass) | Component (B) | | | Component (C) (part by mass) | Component (D) (part by mass) | Component (E) (part by mass) | Other additive (part by mass) | Photochromic curable composition SP value | Output at curing (mW) |
|---|---|---|---|---|---|---|---|---|---|---|
| | | Component (B1) (part by mass) | Component (B2) (part by mass) | Component (B3) (part by mass) | | | | | | |
| Ex. 14 | A1 (0.1) | RX-1 (3) | SO-1 (0.1) | 14G (40)<br>BPE800 (15)<br>D-TMP (35)<br>TSL-1 (5.8)<br>GMA (1) | PC1 (2) | - | HALS-1 (1)<br>HALS-2 (1.5) | CGI-1 (0.3)<br>CGI-2 (0.3)<br>HP (1) | 9.8 | 200 |
| Ex. 15 | A1 (0.1) | RX-1 (3) | SO-1 (0.1) | 14G (40)<br>BPE800 (15)<br>D-TMP (35)<br>TSL-1 (5.8)<br>GMA (1) | PC1 (2) | OC-1 (3) | HALS-1 (1)<br>HALS-2 (1.5) | CGI-1 (0.3)<br>CGI-2 (0.3)<br>HP (1) | 9.7 | 200 |
| Ex. 16 | A1 (0.1) | RX-1 (3) | SO-1 (0.1) | 9G (40)<br>A-400 (25)<br>TMPT (25)<br>TSL-1 (5.9)<br>GMA (1) | PC1 (2) | OC-2 (3) | HALS-1 (1)<br>HALS-3 (1.5) | CGI-1 (0.3)<br>HP (1) | 9.7 | 200 |
| Ex. 17 | A1 (0.1) | RX-1 (3) | SO-1 (0.1) | 9G (40)<br>A-400 (25)<br>TMPT (25)<br>TSL-1 (5.9)<br>GMA (1) | PC2 (2) | OC-3 (3) | HALS-1 (1)<br>HALS-2 (1.5) | CGI-1 (0.3)<br>CGI-2 (0.3)<br>HP (1) | 9.7 | 200 |
| Ex. 18 | A1 (0.1) | RX-1 (3) | SO-1 (0.1)<br>SO-2 (0.1) | 9G (40)<br>A-400 (25)<br>TMPT (25)<br>TSL-1 (5.9)<br>GMA (1) | PC3 (2) | - | HALS-1 (1)<br>HALS-2 (1.5) | CGI-1 (0.3)<br>CGI-2 (0.3)<br>HP (1) | 9.7 | 200 |

[Table 2-2]

| No. | Component (A) (part by mass) | Component (B) | | | Component (C) (part by mass) | Component (D) (part by mass) | Component (E) (part by mass) | Other additive (part by mass) | Photochromic curable composition SP value | Output at curing (mW) |
|---|---|---|---|---|---|---|---|---|---|---|
| | | Component (B1) (part by mass) | Component (B2) (part by mass) | Component (B3) (part by mass) | | | | | | |
| Com. Ex. 1 | - | RX-1 (3) | SO-1 (0.1) | 9G (40)<br>A-400 (25)<br>TMPT (25)<br>TSL-1 (5.8)<br>GMA (1) | PC1 (2) | - | HALS-1 (1)<br>HALS-2 (1.5) | CGI-1 (0.3)<br>CGI-2 (0.3)<br>HP (1) | 10 | 200 |
| Com. Ex. 2 | - | RX-1 (3) | SO-1 (0.1) | 9G (40)<br>A-400 (25)<br>TMPT (25)<br>TSL-1 (5.9)<br>GMA (1) | PC1 (2) | - | HALS-1 (2.5) | CGI-1 (0.3)<br>CGI-2 (0.3)<br>HP (1)<br>L7001 (0.1) | 9.9 | 120 |

[Table 3-1]

| No. | Maximal absorption wavelength (λmax) | Color optical density | Fading rate (sec.) | Repetition durability | | Appearance evaluation | | | | |
|---|---|---|---|---|---|---|---|---|---|---|
| | | | | Residual rate (%) | ΔYI | Appearance | Cracks | White turbidity | Wrinkle defects (1 hr) | Wrinkle defects (2 hrs) |
| Ex. 1 | 576 | 0.88 | 50 | 82 | 7.5 | A | A | A | A | B |
| Ex. 2 | 576 | 0.88 | 47 | 82 | 7.5 | A | A | A | A | B |
| Ex. 3 | 576 | 0.88 | 45 | 82 | 7.5 | A | A | A | B | C |
| Ex. 4 | 576 | 0.85 | 60 | 83 | 7.4 | A | A | A | A | B |
| Ex. 5 | 576 | 0.88 | 50 | 83 | 7.4 | A | A | A | A | B |
| Ex. 6 | 577 | 0.89 | 45 | 84 | 7.4 | A | A | A | A | B |
| Ex. 7 | 570 | 0.86 | 44 | 82 | 7.5 | A | A | A | A | B |
| Ex. 8 | 570 | 0.86 | 44 | 82 | 7.5 | A | A | A | A | B |
| Ex. 9 | 577 | 0.87 | 50 | 82 | 7.5 | B | A | A | A | B |
| Ex. 10 | 576 | 0.88 | 50 | 82 | 7.5 | B | A | A | A | B |
| Ex. 11 | 576 | 0.88 | 50 | 82 | 7.5 | A | A | A | A | B |
| Ex. 12 | 576 | 0.88 | 50 | 82 | 7.5 | A | A | A | A | B |
| Ex. 13 | 576 | 0.88 | 50 | 82 | 7.5 | C | A | A | A | B |
| Ex. 14 | 576 | 0.85 | 48 | 82 | 7.5 | A | A | A | A | B |
| Ex. 15 | 576 | 0.85 | 48 | 82 | 7.5 | A | A | A | A | B |
| Ex. 16 | 576 | 0.86 | 47 | 82 | 7.5 | A | A | A | A | B |
| Ex. 17 | 576 | 0.85 | 48 | 82 | 7.5 | A | A | A | A | B |
| Ex. 18 | 576 | 0.85 | 48 | 82 | 7.5 | B | A | A | A | B |
| Com.Ex. 1 | 576 | 0.88 | 50 | 82 | 7.4 | C | A | A | A | B |
| Com.Ex. 2 | 576 | 0.88 | 50 | 82 | 7.5 | A | A | A | C | D |

[Table 3-2]

| No. | Yield (%) | Adhesion | Vickers hardness | Contact angle (°) | SP value difference | ⊿HAZE |
|---|---|---|---|---|---|---|
| Ex. 1 | 95 | 100 | 4.9 | 70 | 0.3 | 0.2 |
| Ex. 2 | 95 | 100 | 4.7 | 70 | 0.3 | 0.2 |
| Ex. 3 | 70 | 100 | 4.4 | 70 | 0.3 | 2.9 |
| Ex. 4 | 95 | 100 | 4.9 | 70 | 0.3 | 0.2 |
| Ex. 5 | 80 | 100 | 4.6 | 70 | 0.3 | 0.4 |
| Ex. 6 | 80 | 100 | 4.6 | 70 | 0.3 | 0.5 |
| Ex. 7 | 95 | 100 | 4.9 | 70 | 0.3 | 0.2 |
| Ex. 8 | 95 | 100 | 4.9 | 70 | 0.3 | 0.2 |
| Ex. 9 | 90 | 100 | 4.9 | 70 | 0.2 | 0.2 |
| Ex. 10 | 80 | 100 | 4.9 | 66 | 0.3 | 0.2 |
| Ex. 11 | 95 | 100 | 4.9 | 70 | 0.3 | 0.2 |
| Ex. 12 | 95 | 100 | 4.9 | 75 | 0.4 | 0.2 |
| Ex. 13 | 70 | 100 | 4.9 | 77 | 0.5 | 0.2 |
| Ex. 14 | 95 | 100 | 4.9 | 71 | 0.4 | 0.2 |
| Ex. 15 | 95 | 100 | 4.9 | 72 | 0.5 | 0.2 |
| Ex. 16 | 95 | 100 | 4.9 | 71 | 0.5 | 0.2 |
| Ex. 17 | 90 | 100 | 4.9 | 70 | 0.5 | 0.2 |
| Ex. 18 | 95 | 100 | 5.0 | 70 | 0.5 | 0.2 |
| Com.Ex. 1 | 55 | 100 | 4.8 | 55 | 0.2 | 0.2 |
| Com.Ex. 2 | 40 | 100 | 4.8 | 54 | 0.3 | 0.4 |

[Table 4-1]

| No. | Component (A) (part by mass) | Component (B) | | | Component (C) (part by mass) | Component (D) (part by mass) | Component (E) (part by mass) | Other additive (part by mass) | Photochromic curable composition SP value | Output at curing (mW) |
|---|---|---|---|---|---|---|---|---|---|---|
| | | Component (B1) (part by mass) | Component (B2) (part by mass) | Component (B3) (part by mass) | | | | | | |
| Ex. 19 | A1 (0.1) | RX-1 (3) | SO-1 (0.1) | 9G (40)<br>A-400 (25)<br>TMPT (25)<br>TSL-1 (5.8)<br>GMA (1) | PC1 (2) | - | HALS-2 (2.0) | CGI-1 (0.3)<br>HP (1) | 9.9 | 210 |
| Ex. 20 | A1 (0.1) | RX-1 (3) | - | 9G (40)<br>A-400 (25)<br>TMPT (25)<br>TSL-1 (5.8)<br>GMA (1) | PC1 (2) | - | HALS-2 (2.0) | CGI-1 (0.3)<br>HP (1) | 9.9 | 210 |
| Ex. 21 | A1 (0.1) | - | SO-1 (0.1) | 9G (40)<br>A-400 (25)<br>TMPT (25)<br>TSL-1 (5.8)<br>GMA (1) | PC1 (2) | - | HALS-2 (2.0) | CGI-1 (0.3)<br>HP (1) | 9.9 | 210 |
| Ex. 22 | A1 (0.1) | RX-1 (3) | SO-1 (0.1) | 9G (40)<br>A-400 (25)<br>TMPT (25)<br>TSL-1 (5.8)<br>GMA (1) | PC4 (3) | - | HALS-2 (2.0) | CGI-1 (0.3)<br>HP (1) | 9.9 | 210 |
| Ex. 23 | A1 (0.1) | RX-1 (3) | SO-1 (0.1) | 9G (40)<br>A-400 (25)<br>TMPT (25)<br>TSL-1 (5.8)<br>GMA (1) | PC5 (3) | - | HALS-2 (2.0) | CGI-1 (0.3)<br>HP (1) | 9.9 | 210 |

[Table 4-2]

| No. | Component (A) (part by mass) | Component (B) | | | Component (C) (part by mass) | Component (D) (part by mass) | Component (E) (part by mass) | Other additive (part by mass) | Photochromic curable composition SP value | Output at curing (mW) |
|---|---|---|---|---|---|---|---|---|---|---|
| | | Component (B1) (part by mass) | Component (B2) (part by mass) | Component (B3) (part by mass) | | | | | | |
| Ex. 24 | A1 (0.1) | RX-1 (3) | SO-1 (0.1) | 9G (40)<br>A-400 (25)<br>TMPT (25)<br>TSL-1 (5.8)<br>GMA (1) | PC6 (2) | - | HALS-2 (2.0) | CGI-1 (0.3)<br>HP (1) | 9.9 | 210 |
| Ex. 25 | A3 (0.1) | RX-1 (3) | SO-1 (0.1) | 9G (40)<br>A-400 (25)<br>TMPT (25)<br>TSL-1 (5.8)<br>GMA (1) | PC1 (2) | - | HALS-2 (2.0) | CGI-1 (0.3)<br>HP (1) | 9.9 | 210 |
| Ex. 26 | A4 (0.1) | RX-1 (3) | SO-1 (0.1) | 9G (40)<br>A-400 (25)<br>TMPT (25)<br>TSL-1 (5.8)<br>GMA (1) | PC1 (2) | - | HALS-2 (2.0) | CGI-1 (0.3)<br>HP (1) | 9.9 | 210 |
| Ex. 27 | A5 (0.1) | RX-1 (3) | SO-1 (0.1) | 9G (40)<br>A-400 (25)<br>TMPT (25)<br>TSL-1 (5.8)<br>GMA (1) | PC1 (2) | - | HALS-2 (2.0) | CGI-1 (0.3)<br>HP (1) | 9.9 | 210 |
| Ex. 28 | A6 (0.1) | RX-1 (3) | SO-1 (0.1) | 9G (40)<br>A-400 (25)<br>TMPT (25)<br>TSL-1 (5.8)<br>GMA (1) | PC1 (2) | - | HALS-2 (2.0) | CGI-1 (0.3)<br>HP (1) | 9.9 | 210 |

[Table 4-3]

| No. | Component (A) (part by mass) | Component (B) | | | Component (C) (part by mass) | Component (D) (part by mass) | Component (E) (part by mass) | Other additive (part by mass) | Photochromic curable composition SP value | Output at curing (mW) |
|---|---|---|---|---|---|---|---|---|---|---|
| | | Component (B1) (part by mass) | Component (B2) (part by mass) | Component (B3) (part by mass) | | | | | | |
| Ex. 29 | A7(0.1) | RX-1 (3) | SO-1 (0.1) | 9G (40)<br>A-400 (25)<br>TMPT (25)<br>TSL-1 (5.8)<br>GMA (1) | PC1 (2) | - | HALS-2 (2.0) | CGI-1 (0.3)<br>HP (1) | 9.9 | 210 |
| Ex. 30 | A8 (0.1) | RX-1 (3) | SO-1 (0.1) | 9G (40)<br>A-400 (25)<br>TMPT (25)<br>TSL-1 (5.8)<br>GMA (1) | PC1 (2) | - | HALS-2 (2.0) | CGI-1 (0.3)<br>HP (1) | 9.9 | 210 |
| Ex. 31 | A9 (0.1) | RX-1 (3) | SO-1 (0.1) | 9G (40)<br>A-400 (25)<br>TMPT (25)<br>TSL-1 (5.8)<br>GMA (1) | PC1 (2) | - | HALS-2 (2.0) | CGI-1 (0.3)<br>HP (1) | 9.9 | 210 |
| Ex. 32 | A10 (0.1) | RX-1 (3) | SO-1 (0.1) | 9G (40)<br>A-400 (25)<br>TMPT (25)<br>TSL-1 (5.8)<br>GMA (1) | PC1 (2) | - | HALS-2 (2.0) | CGI-1 (0.3)<br>HP (1) | 9.9 | 210 |

[Table 5-1]

| No. | Component (A) (part by mass) | Component (B) | | | Component (C) (part by mass) | Component (D) (part by mass) | Component (E) (part by mass) | Other additive (part by mass) | Photochromic curable composition SP value | Output at curing (mW) |
|---|---|---|---|---|---|---|---|---|---|---|
| | | Component (B1) (part by mass) | Component (B2) (part by mass) | Component (B3) (part by mass) | | | | | | |
| Ex. 33 | A11 (0.1) | RX-1 (3) | SO-1 (0.1) | 9G (40)<br>A-400 (25)<br>TMPT (25)<br>TSL-1 (5.8)<br>GMA (1) | PC1 (2) | - | HALS-2 (2.0) | CGI-1 (0.3)<br>HP (1) | 9.8 | 210 |
| Ex. 34 | A12 (0.1) | RX-1 (3) | SO-1 (0.1) | 9G (40)<br>A-400 (25)<br>TMPT (25)<br>TSL-1 (5.8)<br>GMA (1) | PC1 (2) | - | HALS-2 (2.0) | CGI-1 (0.3)<br>HP (1) | 9.7 | 210 |
| Ex. 35 | A13 (0.1) | RX-1 (3) | SO-1 (0.1) | 9G (40)<br>A-400 (25)<br>TMPT (25)<br>TSL-1 (5.8)<br>GMA (1) | PC1 (2) | - | HALS-2 (2.0) | CGI-1 (0.3)<br>HP (1) | 9.7 | 210 |
| Ex. 36 | A14 (0.1) | RX-1 (3) | SO-1 (0.1) | 9G (40)<br>A-400 (25)<br>TMPT (25)<br>TSL-1 (5.8)<br>GMA (1) | PC1 (2) | - | HALS-2 (2.0) | CGI-1 (0.3)<br>HP (1) | 9.7 | 210 |
| Ex. 37 | A15 (0.1) | RX-1 (3) | SO-1 (0.1) | 9G (40)<br>A-400 (25)<br>TMPT (25)<br>TSL-1 (5.8)<br>GMA (1) | PC1 (2) | - | HALS-2 (2.0) | CGI-1 (0.3)<br>HP (1) | 9.7 | 210 |

[Table 5-2]

| No. | Component (A) (part by mass) | Component (B) | | | Component (C) (part by mass) | Component (D) (part by mass) | Component (E) (part by mass) | Other additive (part by mass) | Photochromic curable composition SP value | Output at curing (mW) |
|---|---|---|---|---|---|---|---|---|---|---|
| | | Component (B1) (part by mass) | Component (B2) (part by mass) | Component (B3) (part by mass) | | | | | | |
| Ex. 38 | A16 (0.1) | RX-1 (3) | SO-1 (0.1) | 9G (40)<br>A-400 (25)<br>TMPT (25)<br>TSL-1 (5.8)<br>GMA (1) | PC1 (2) | - | HALS-2 (2.0) | CGI-1 (0.3)<br>HP (1) | 9.7 | 210 |
| Ex. 39 | A17 (0.1) | RX-1 (3) | SO-1 (0.1) | 9G (40)<br>A-400 (25)<br>TMPT (25)<br>TSL-1 (5.8)<br>GMA (1) | PC1 (2) | - | HALS-2 (2.0) | CGI-1 (0.3)<br>HP (1) | 9.7 | 210 |
| Ex. 40 | A18 (0.1) | RX-1 (3) | SO-1 (0.1) | 9G (40)<br>A-400 (25)<br>TMPT (25)<br>TSL-1 (5.8)<br>GMA (1) | PC1 (2) | - | HALS-2 (2.0) | CGI-1 (0.3)<br>HP (1) | 9.7 | 210 |
| Ex. 41 | A18 (0.1) | RX-1 (3) | SO-1 (0.1) | 9G (40)<br>A-400 (25)<br>TMPT (25)<br>TSL-1 (5.8)<br>GMA (1) | PC1 (2) | - | HALS-2 (2.0) | CGI-1 (0.3)<br>HP (1)<br>CA-1 ($1.0\times10^{-4}$) | 9.7 | 210 |
| Ex. 42 | A19 (0.1) | RX-1 (3) | SO-1 (0.1) | 9G (40)<br>A-400 (25)<br>TMPT (25)<br>TSL-1 (5.8)<br>GMA (1) | PC1 (2) | - | HALS-2 (2.0) | CGI-1 (0.3)<br>HP (1) | 9.7 | 210 |

[Table 5-3]

| No. | Component (A) (part by mass) | Component (B) | | | Component (C) (part by mass) | Component (D) (part by mass) | Component (E) (part by mass) | Other additive (part by mass) | Photochromic curable composition SP value | Output at curing (mW) |
|---|---|---|---|---|---|---|---|---|---|---|
| | | Component (B1) (part by mass) | Component (B2) (part by mass) | Component (B3) (part by mass) | | | | | | |
| Ex. 43 | A20 (0.1) | RX-1 (3) | SO-1 (0.1) | 9G (40)<br>A-400 (25)<br>TMPT (25)<br>TSL-1 (5.8)<br>GMA (1) | PC1 (2) | - | HALS-2 (2.0) | CGI-1 (0.3)<br>HP (1) | 9.7 | 210 |
| Ex. 44 | A20 (0.1) | RX-1 (3) | SO-1 (0.1) | 9G (40)<br>A-400 (25)<br>TMPT (25)<br>TSL-1 (5.8)<br>GMA (1) | PC1 (2) | - | HALS-2 (2.0) | CGI-1 (0.3)<br>HP (1)<br>CA-1 ($1.0\times10^{-4}$) | 9.7 | 210 |
| Ex. 45 | A21 (0.1) | RX-1 (3) | SO-1 (0.1) | 9G (40)<br>A-400 (25)<br>TMPT (25)<br>TSL-1 (5.8)<br>GMA (1) | PC1 (2) | - | HALS-2 (2.0) | CGI-1 (0.3)<br>HP (1) | 9.7 | 210 |
| Ex. 46 | A22 (0.1) | RX-1 (3) | SO-1 (0.1) | 9G (40)<br>A-400 (25)<br>TMPT (25)<br>TSL-1 (5.8)<br>GMA (1) | PC1 (2) | - | HALS-2 (2.0) | CGI-1 (0.3)<br>HP (1) | 9.7 | 210 |

[Table 6-1]

| No. | Component (A) (part by mass) | Component (B) | | | Component (C) (part by mass) | Component (D) (part by mass) | Component (E) (part by mass) | Other additive (part by mass) | Photochromic curable composition SP value | Output at curing (mW) |
|---|---|---|---|---|---|---|---|---|---|---|
| | | Component (B1) (part by mass) | Component (B2) (part by mass) | Component (B3) (part by mass) | | | | | | |
| Ex. 47 | A13 (0.01) | RX-1 (3) | SO-1 (0.1) | 9G (40)<br>A-400 (25)<br>TMPT (25)<br>TSL-1 (5.8)<br>GMA (1) | PC1 (2) | - | HALS-2 (2.0) | CGI-1 (0.3)<br>HP (1) | 9.7 | 210 |
| Ex. 48 | A13 (0.05) | RX-1 (3) | SO-1 (0.1) | 9G (40)<br>A-400 (25)<br>TMPT (25)<br>TSL-1 (5.8)<br>GMA (1) | PC1 (2) | - | HALS-2 (2.0) | CGI-1 (0.3)<br>HP (1) | 9.7 | 210 |
| Ex. 49 | A13 (0.5) | RX-1 (3) | SO-1 (0.1) | 9G (40)<br>A-400 (25)<br>TMPT (25)<br>TSL-1 (5.8)<br>GMA (1) | PC1 (2) | - | HALS-2 (2.0) | CGI-1 (0.3)<br>HP (1) | 9.7 | 210 |
| Ex. 50 | A13 (3) | RX-1 (3) | SO-1 (0.1) | 9G (40)<br>A-400 (25)<br>TMPT (25)<br>TSL-1 (5.8)<br>GMA (1) | PC1 (2) | - | HALS-2 (2.0) | CGI-1 (0.3)<br>HP (1) | 9.7 | 210 |
| Ex. 51 | A1 (0.1) | RX-1 (3) | SO-1 (0.1)<br>SO-2 (0.1) | 9G (40)<br>A-400 (25)<br>TMPT (25)<br>TSL-1 (5.8)<br>GMA (1) | PC1 (2) | - | HALS-2 (2.0) | CGI-1 (0.3)<br>HP (1)<br>ER-10 (0.1) | 9.7 | 210 |

[Table 6-2]

| No. | Component (A) (part by mass) | Component (B) | | | Component (C) (part by mass) | Component (D) (part by mass) | Component (E) (part by mass) | Other additive (part by mass) | Photochromic curable composition SP value | Output at curing (mW) |
|---|---|---|---|---|---|---|---|---|---|---|
| | | Component (B1) (part by mass) | Component (B2) (part by mass) | Component (B3) (part by mass) | | | | | | |
| Ex. 52 | A1 (0.1) | RX-1 (3) | SO-1 (0.1)<br>SO-2 (0.1) | 9G (40)<br>A-400 (25)<br>TMPT (25)<br>TSL-1 (5.8)<br>GMA (1) | PC1 (2) | - | HALS-2 (2.0) | CGI-1 (0.3)<br>HP (1)<br>NE - 10 (0.1) | 9.7 | 210 |
| Ex. 53 | A13 (0.1) | RX-1 (3) | SO-1 (0.1)<br>SO-2 (0.1) | 9G (40)<br>A-400 (25)<br>TMPT (25)<br>TSL-1 (5.8)<br>GMA (1) | PC1 (2) | - | HALS-2 (2.0) | CGI-1 (0.3)<br>HP (1)<br>ER-10 (0.1) | 9.7 | 210 |
| Ex. 54 | A13 (0.1) | RX-1 (3) | SO-1 (0.1)<br>SO-2 (0.1) | 9G (40)<br>A-400 (25)<br>TMPT (25)<br>TSL-1 (5.8)<br>GMA (1) | PC1 (2) | - | HALS-2 (2.0) | CGI-1 (0.3)<br>HP (1)<br>NE - 10 (0.1) | 9.7 | 210 |
| Ex. 55 | A22 (0.1) | RX-1 (3) | SO-1 (0.1) | 9G (40)<br>APC56 (25)<br>TMPT (25)<br>TSL-1 (5.8)<br>GMA (1) | PC1 (2) | - | HALS-2 (2.0) | CGI-1 (0.3)<br>HP (1) | 9.7 | 210 |

[Table 7-1]

| No. | Maximal absorption wavelength (λmax) | Color optical density | Fading rate (sec.) | Repetition durability | | Appearance evaluation | | | | |
|---|---|---|---|---|---|---|---|---|---|---|
| | | | | Residual rate (%) | ΔYI | Appearance | Cracks | White turbidity | Wrinkle defects (1 hr) | Wrinkle defects (2 hrs) |
| Ex. 19 | 576 | 0.87 | 47 | 81 | 7.6 | A | A | A | A | B |
| Ex. 20 | 576 | 0.87 | 44 | 82 | 7.5 | A | A | A | A | B |
| Ex. 21 | 576 | 0.85 | 49 | 81 | 7.6 | A | A | A | A | B |
| Ex. 22 | 580 | 0.86 | 45 | 81 | 7.6 | A | A | A | A | B |
| Ex. 23 | 580 | 0.86 | 44 | 82 | 7.5 | A | A | A | A | B |
| Ex. 24 | 586 | 0.89 | 57 | 81 | 7.6 | A | A | A | A | B |
| Ex. 25 | 576 | 0.87 | 47 | 83 | 7.6 | B | A | A | A | B |
| Ex. 26 | 576 | 0.87 | 47 | 83 | 7.6 | B | A | A | A | B |
| Ex. 27 | 577 | 0.87 | 46 | 83 | 7.6 | B | A | A | A | B |
| Ex. 28 | 576 | 0.87 | 46 | 82 | 7.5 | B | A | A | A | B |
| Ex. 29 | 576 | 0.87 | 46 | 82 | 7.5 | A | A | A | A | B |
| Ex. 30 | 577 | 0.88 | 47 | 83 | 7.6 | B | A | A | A | B |
| Ex. 31 | 576 | 0.87 | 47 | 83 | 7.6 | B | A | A | A | B |
| Ex. 32 | 576 | 0.87 | 47 | 82 | 7.5 | A | A | A | A | B |

(continued)

| No. | Maximal absorption wavelength (λmax) | Color optical density | Fading rate (sec.) | Repetition durability |  | Appearance evaluation |  |  |  |  |
|---|---|---|---|---|---|---|---|---|---|---|
|  |  |  |  | Residual rate (%) | ΔYI | Appearance | Cracks | White turbidity | Wrinkle defects (1 hr) | Wrinkle defects (2 hrs) |
| Ex. 33 | 576 | 0.87 | 47 | 82 | 7.5 | C | A | A | A | B |
| Ex. 34 | 576 | 0.87 | 47 | 83 | 7.6 | B | A | A | A | B |
| Ex. 35 | 576 | 0.88 | 46 | 83 | 7.6 | A | A | A | A | B |
| Ex. 36 | 576 | 0.86 | 47 | 81 | 7.6 | B | A | A | A | B |

[Table 7-2]

| No. | Yield (%) | Adhesion | Vickers hardness | Contact angle (°) | SP value difference | Δ HAZE |
|---|---|---|---|---|---|---|
| Ex. 19 | 95 | 100 | 4.6 | 70 | 0.3 | 0.2 |
| Ex. 20 | 90 | 100 | 4.4 | 70 | 0.3 | 0.4 |
| Ex. 21 | 90 | 100 | 4.7 | 70 | 0.3 | 0.4 |
| Ex. 22 | 95 | 100 | 4.6 | 70 | 0.3 | 0.2 |
| Ex. 23 | 90 | 100 | 4.4 | 70 | 0.3 | 0.4 |
| Ex. 24 | 90 | 100 | 4.7 | 70 | 0.3 | 0.4 |
| Ex. 25 | 95 | 100 | 4.6 | 56 | 0.3 | 0.2 |
| Ex. 26 | 80 | 100 | 4.6 | 56 | 0.3 | 0.4 |
| Ex. 27 | 80 | 100 | 4.6 | 56 | 0.3 | 0.5 |
| Ex. 28 | 95 | 100 | 4.5 | 56 | 0.3 | 0.2 |
| Ex. 29 | 95 | 100 | 4.5 | 55 | 0.3 | 0.2 |
| Ex. 30 | 90 | 100 | 4.5 | 55 | 0.2 | 0.2 |
| Ex. 31 | 80 | 100 | 4.5 | 56 | 0.3 | 0.2 |
| Ex. 32 | 95 | 100 | 4.5 | 55 | 0.3 | 0.2 |
| Ex. 33 | 95 | 100 | 4.5 | 56 | 0.4 | 0.2 |
| Ex. 34 | 70 | 100 | 4.5 | 55 | 0.5 | 0.2 |
| Ex. 35 | 95 | 100 | 4.6 | 56 | 0.5 | 0.2 |
| Ex. 36 | 95 | 100 | 4.5 | 56 | 0.5 | 0.2 |

[Table 8-1]

| No. | Maximal absorption wavelength (λmax) | Color optical density | Fading rate (sec.) | Repetition durability | | Appearance evaluation | | | | |
|---|---|---|---|---|---|---|---|---|---|---|
| | | | | Residual rate (%) | ΔYI | Appearance | Cracks | White turbidity | Wrinkle defects (1 hr) | Wrinkle defects (2 hrs) |
| Ex. 37 | 576 | 0.86 | 47 | 81 | 7.5 | C | A | A | A | B |
| Ex. 38 | 576 | 0.86 | 47 | 81 | 7.5 | C | A | A | A | B |
| Ex. 39 | 576 | 0.86 | 47 | 81 | 7.5 | C | A | A | A | B |
| Ex. 40 | 576 | 0.86 | 47 | 81 | 7.4 | C | A | A | A | C |
| Ex. 41 | 576 | 0.86 | 47 | 71 | 8.5 | B | A | A | A | B |
| Ex. 42 | 576 | 0.86 | 47 | 81 | 7.4 | C | A | A | A | C |
| Ex. 43 | 576 | 0.86 | 47 | 81 | 7.5 | C | A | A | A | C |
| Ex. 44 | 576 | 0.86 | 46 | 71 | 8.5 | B | A | A | A | B |
| Ex. 45 | 576 | 0.86 | 47 | 81 | 7.4 | C | A | A | A | C |
| Ex. 46 | 576 | 0.86 | 47 | 81 | 7.5 | C | A | A | A | C |
| Ex. 47 | 576 | 0.88 | 46 | 83 | 7.6 | A | A | A | A | B |
| Ex. 48 | 576 | 0.88 | 46 | 83 | 7.6 | C | A | A | A | B |
| Ex. 49 | 576 | 0.88 | 46 | 83 | 7.6 | A | A | A | A | B |
| Ex. 50 | 576 | 0.88 | 46 | 83 | 7.6 | A | A | A | A | B |

(continued)

| No. | Maximal absorption wavelength (λmax) | Color optical density | Fading rate (sec.) | Repetition durability | | Appearance evaluation | | | | |
|---|---|---|---|---|---|---|---|---|---|---|
| | | | | Residual rate (%) | ΔYI | Appearance | Cracks | White turbidity | Wrinkle defects (1 hr) | Wrinkle defects (2 hrs) |
| Ex. 51 | 576 | 0.88 | 46 | 83 | 7.6 | A | A | A | A | B |
| Ex. 52 | 576 | 0.88 | 46 | 83 | 7.6 | A | A | A | A | B |
| Ex. 53 | 576 | 0.88 | 46 | 83 | 7.6 | B | A | A | A | B |
| Ex. 54 | 576 | 0.88 | 46 | 83 | 7.6 | B | A | A | A | B |
| Ex. 55 | 576 | 0.86 | 48 | 81 | 7.5 | C | A | A | A | C |

[Table 8-2]

| No. | Yield (%) | Adhesion | Vickers hardness | Contact angle (°) | SP value difference | ⊿ HAZE |
|---|---|---|---|---|---|---|
| Ex. 37 | 70 | 100 | 4.5 | 76 | 0.5 | 0.4 |
| Ex. 38 | 70 | 100 | 4.5 | 76 | 0.5 | 0.4 |
| Ex. 39 | 70 | 100 | 4.5 | 75 | 0.5 | 0.4 |
| Ex. 40 | 70 | 100 | 4.5 | 55 | 0.5 | 0.5 |
| Ex. 41 | 70 | 100 | 4.5 | 54 | 0.5 | 0.2 |
| Ex. 42 | 65 | 100 | 4.5 | 55 | 0.5 | 0.5 |
| Ex. 43 | 70 | 100 | 4.5 | 54 | 0.5 | 0.5 |
| Ex. 44 | 70 | 100 | 4.5 | 54 | 0.5 | 0.2 |
| Ex. 45 | 70 | 100 | 4.5 | 55 | 0.5 | 0.5 |
| Ex. 46 | 70 | 100 | 4.5 | 54 | 0.5 | 0.5 |
| Ex. 47 | 70 | 100 | 4.5 | 56 | 0.5 | 0.2 |
| Ex. 48 | 90 | 100 | 4.5 | 57 | 0.5 | 0.2 |
| Ex. 49 | 90 | 100 | 4.6 | 57 | 0.5 | 0.2 |
| Ex. 50 | 70 | 100 | 4.6 | 57 | 0.5 | 0.4 |
| Ex. 51 | 95 | 100 | 4.6 | 71 | 0.5 | 0.2 |
| Ex. 52 | 90 | 100 | 4.6 | 70 | 0.5 | 0.2 |
| Ex. 53 | 95 | 100 | 4.6 | 56 | 0.5 | 0.2 |
| Ex. 54 | 55 | 100 | 4.6 | 55 | 0.5 | 0.2 |
| Ex. 55 | 70 | 100 | 4.6 | 54 | 0.5 | 0.5 |

Explanation of letters or numerals:

1: Polyrotaxane
2: Axial molecule
3: Cyclic molecule
4: Bulky terminal group
5: Side chain

## Claims

**1.** A photochromic curable composition comprising:

(A) a siloxane having an acyclic polysiloxane bond, and at least one of a radically polymerizable group and a group reactive with a radically polymerizable group,
(B) a radically polymerizable monomer component, and
(C) a photochromic compound.

**2.** The photochromic curable composition according to claim 1, wherein the amount of the siloxane relative to 100 parts by mass of the radically polymerizable monomer component is 0.01 parts by mass or more and 10 parts by mass or less.

**3.** The photochromic curable composition according to claim 1 or 2, wherein the siloxane comprises a compound

represented by a formula (8) below:

[CF 1]

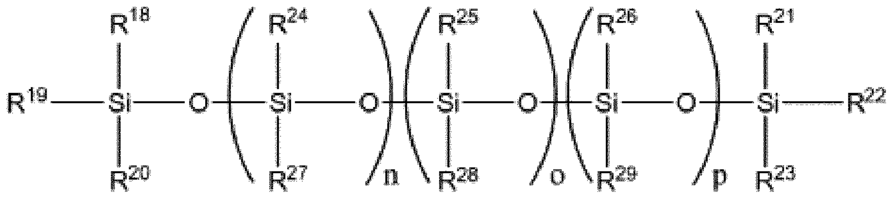

(8)

in the formula (8),

n is a number from 0 to 20,
o is a number from 0 to 20,
p is a number from 0 to 20,
$R^{18}$, $R^{19}$, $R^{20}$, $R^{21}$, $R^{22}$, $R^{23}$, $R^{24}$, $R^{25}$, $R^{26}$, $R^{27}$, $R^{28}$ and $R^{29}$ are each a hydrogen atom, an alkyl group having 1 to 20 carbon atoms, an alkoxy group having 1 to 20 carbon atoms, a phenyl group, $-(CH_2)_\alpha OR^{30}$, $-(CH_2CH_2O)_\alpha R^{30}$, $-(CH(CH_3)CH_2O)_\alpha R^{30}$, $-(CH_2CH(CH_3)O)_\alpha R^{30}$, $-(CH_2)_qO-(CH_2CH_2O)_rR^{30}-$, $-(CH_2)_qO-(CH(CH_3)CH_2O)_rR^{30}$, $-(CH_2)_qO-(CH_2CH(CH_3)O)_rR^{30}$, $-(CH_2CH_2O)_q-(CH_2CH(CH_3)O)_rR^{30}$, $-(CH_2CH(CH_3)O)_q-(CH_2CH_2O)_rR^{30}$, $-(CH_2CH_2O)_q-(CH_2CH(CH_3)O)_r-(CH_2CH_2O)_sR^{30}$, $-(CH_2)_qO-(CH_2CH_2O)_r-(CH_2CH(CH_3)O)_sR^{30}$, $-(CH_2)_qO-(CH_2CH(CH_3)O)_r-(CH_2CH_2O)_sR^{30}$, $-(CH_2)_qO-(CH_2CH_2O)_r-(CH_2CH(CH_3)O)_s-(CH_2CH_2O)_zR^{30}$, an acryloyl group, a methacryloyl group, a vinyl group, a thiol group, an amino group, $-R^{31}NH_2$, an epoxy group, a group represented by a formula (9) below, or a group represented by a formula (10) below,
$R^{30}$ is a hydrogen atom, a methyl group, an ethyl group, an n-propyl group, or an isopropyl group,
$R^{31}$ is an alkylene group having 1 to 20 carbon atoms or - $(CH_2)_\alpha O-$;
at least one of $R^{18}$ to $R^{29}$ is an acryloyl group, a methacryloyl group, a vinyl group, a thiol group, an amino group, $-R^{31}NH_2$, an epoxy group, a group represented by the formula (9), or a group represented by the formula (10):

[CF 2]

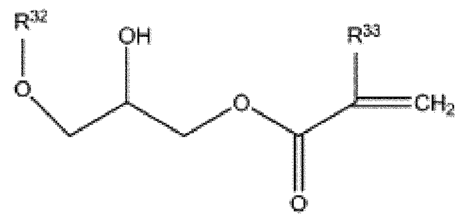

(9)

in the formula (9), $R^{32}$ is an alkylene group having 1 to 20 carbon atoms, $-(CH_2)_\alpha O-$, $-(CH_2CH_2O)_\alpha-$, or $-(CH_2CH(CH_3)O)_\alpha-$,
$R^{33}$ is a hydrogen atom or a methyl group,

[CF 3]

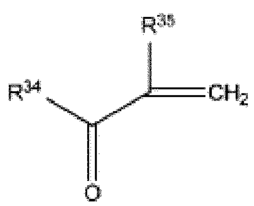

(10)

in the formula (10), $R^{34}$ is an oxygen atom, $-(CH_2)_\alpha O-$, $-(CH_2CH_2O)_\alpha-$, $-(CH(CH_3)CH_2O)_\alpha-$, $-(CH_2CH(CH_3)O)_\alpha-$, $-(CH_2)_qO-(CH_2CH_2O)_r-$, $-(CH_2)_qO-(CH(CH_3)CH_2O)_r-$, $-(CH_2)_qO-(CH_2CH(CH_3)O)_r-$,

$-(CH_2CH_2O)_q-(CH_2CH(CH_3)O)_r-$, $-(CH_2CH(CH_3)O)_q-(CH_2CH_2O)_r-$, $-(CH_2CH_2O)_q-(CH_2CH(CH_3)O)_r-(CH_2CH_2O)_s-$, $-(CH_2)_qO-(CH_2CH_2O)_r-(CH_2CH(CH_3)O)_s-$, $-(CH_2)_qO-(CH_2CH(CH_3)O)_r-(CH_2CH_2O)_s-$, or $-(CH_2)_qO-(CH_2CH_2O)_r-(CH_2CH(CH_3)O)_s-(CH_2CH_2O)_z-$,
$R^{35}$ is a hydrogen atom or a methyl group,

in the formula (8), the formula (9) and the formula (10), $\alpha$ is a number from 1 to 20; q, r, s, and z each is a number from 0 to 20, q+r is a number from 1 to 40, q+r+s is a number from 1 to 60, and q+r+s+z is a number from 1 to 80.

**4.** The photochromic curable composition according to any one of claims 1 to 3, wherein the radically polymerizable group and the group reactive with a radically polymerizable group in the siloxane comprise a (meth)acryloyl group.

**5.** The photochromic curable composition according to any one of claims 1 to 4, wherein the radically polymerizable monomer component comprises a polyrotaxane compound having a radically polymerizable group.

**6.** The photochromic curable composition according to any one of claims 1 to 5, wherein the radically polymerizable monomer component comprises silsesquioxane having a bifunctional or polyfunctional (meth)acryloyl group.

**7.** The photochromic curable composition according to any one of claims 1 to 6, further comprising a reactive hindered amine compound having at least one reactive group selected from the group consisting of a radically polymerizable group and a group reactive with the radically polymerizable group.

**8.** The photochromic curable composition according to any one of claims 1 to 7, further comprising a non-reactive hindered amine compound having neither radically polymerizable group nor group reactive with a radically polymerizable group.

**9.** The photochromic curable composition according to any one of claims 1 to 8, further comprising an organic compound having a boiling point of 80°C or higher and 200°C or lower and a Hildebrand SP value of 8.0 or more and 10.0 or less.

**10.** A photochromic laminate comprising:

an optical substrate,
a photochromic resin layer, as a cured product of the photochromic curable composition according to any one of claims 1 to 9, and
a polyurethane resin layer disposed between the optical substrate and the photochromic resin layer.

**11.** A method for producing a photochromic laminate, comprising the following steps:

a step of forming a polyurethane resin layer by applying, on one surface of an optical substrate, a coating solution containing at least one compound selected from the group consisting of a polyurethane resin and a precursor of a moisture-curable urethane resin and a solvent having a boiling point of 70°C or higher and a Hildebrand SP value of 8.0 or more, and removing the solvent from the coating film; and
a step of forming a photochromic resin layer by applying on the polyurethane resin layer the photochromic curable composition according to any one of claims 1 to 9 and curing the coating film.

Fig. 1

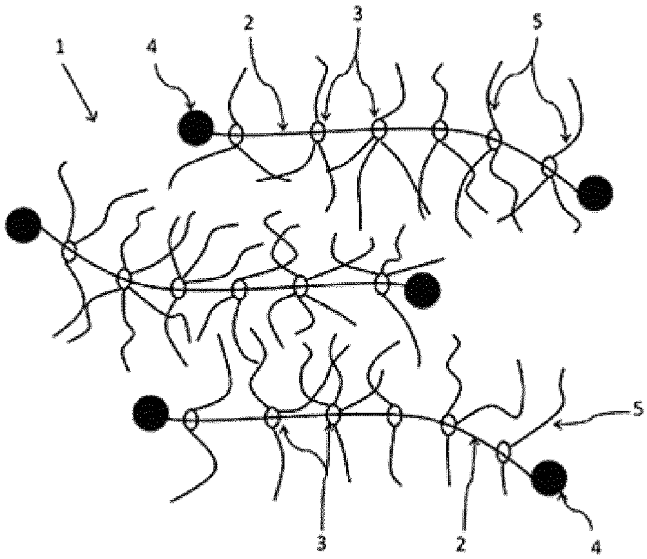

## INTERNATIONAL SEARCH REPORT

International application No.
**PCT/JP2022/009857**

**A. CLASSIFICATION OF SUBJECT MATTER**

***B32B 27/40***(2006.01)i; ***C08F 290/00***(2006.01)i; ***C08F 290/14***(2006.01)i; ***C09K 9/02***(2006.01)i; ***G02C 7/10***(2006.01)i; ***C09D 183/07***(2006.01)i; ***C08F 2/44***(2006.01)i; ***C09D 7/63***(2018.01)i; ***B32B 7/023***(2019.01)i; ***G02B 5/23***(2006.01)i

FI: G02B5/23; C08F2/44 B; C09K9/02 B; C08F2/44 Z; C08F290/14; B32B7/023; B32B27/40; C09D183/07; C09D7/63; C08F290/00; G02C7/10

According to International Patent Classification (IPC) or to both national classification and IPC

**B. FIELDS SEARCHED**

Minimum documentation searched (classification system followed by classification symbols)

B32B27/40; C08F290/00; C08F290/14; C09K9/02; G02C7/10; C09D183/07; C08F2/44; C09D7/63; B32B7/023; G02B5/23

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | WO 2017/022212 A1 (FUJIFILM CORP.) 09 February 2017 (2017-02-09) paragraphs [0142], [0145], [0147] | 1-11 |
| A | JP 2016-519691 A (TRANSITIONS OPTICAL, INC.) 07 July 2016 (2016-07-07) paragraphs [0009], [0492], [0495] | 1-11 |
| A | WO 2018/062384 A1 (MITSUI CHEMICALS, INC.) 05 April 2018 (2018-04-05) paragraphs [0014], [0086], [0104]-[0105], [0169] | 1-11 |
| A | JP 2009-244900 A (TOKUYAMA CORP.) 22 October 2009 (2009-10-22) paragraphs [0023], [0082]-[0083], [0112], [0115], [0121], [0130], [0149] | 1-11 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **06 May 2022** | **24 May 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2022/009857**

| Patent document cited in search report | Publication date (day/month/year) | Patent family member(s) | Publication date (day/month/year) |
|---|---|---|---|
| WO 2017/022212 A1 | 09 February 2017 | (Family: none) | |
| JP 2016-519691 A | 07 July 2016 | US 2014/0272468 A1<br>paragraphs [0009], [0399], [0401]<br>EP 2970760 B1<br>AU 2014237729 A<br>CN 105143397 A<br>KR 10-2015-0127226 A<br>HK 1215274 A<br>BR 112015022031 A<br>WO 2014/149852 A2 | |
| WO 2018/062384 A1 | 05 April 2018 | US 2021/0054126 A1<br>paragraphs [0024], [0140], [0160]-[0161], [0274]<br>EP 3521322 A1<br>KR 10-2019-0036556 A<br>CN 109689698 A<br>BR 112019004133 A<br>MX 2019003634 A | |
| JP 2009-244900 A | 22 October 2009 | US 2006/0269741 A1<br>paragraphs [0022], [0084]-[0085], [0107], [0121], [0130], [0144]<br>EP 1602479 A1<br>AU 2004218188 A<br>HU E043257 T<br>ES 2726351 T<br>WO 2004/078476 A1 | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2012176439 A
- WO 2013099640 A
- WO 2015068798 A
- JP 2004143449 A
- JP 11029640 A
- JP H0228154 A
- JP 62288830 A
- WO 9422850 A
- WO 9614596 A
- WO 2000015630 A
- WO 2004041961 A
- WO 2009146509 A
- WO 2012149599 A
- WO 2012162725 A
- WO 2013078086 A
- WO 2019013249 A
- WO 2019203205 A
- WO 2018030275 A


### Non-patent literature cited in the description


- *Appl. Organometal. Chem.,* 2001, 683-692
- Handbook of Chemistry Applied. Chemical Society of Japan, 1973
- Polymer Handbook. 1998